(19) Europäisches Patentamt
European Patent Office
Office européen des brevets

(11) EP 4 123 750 A1

(12) EUROPEAN PATENT APPLICATION
published in accordance with Art. 153(4) EPC

(43) Date of publication:
**25.01.2023 Bulletin 2023/04**

(21) Application number: **21771856.8**

(22) Date of filing: **15.03.2021**

(51) International Patent Classification (IPC):
***H01M 4/13*** *(2010.01)* ***H01M 4/485*** *(2010.01)*
***H01M 4/62*** *(2006.01)* ***H01M 10/052*** *(2010.01)*
***H01M 10/0562*** *(2010.01)* ***H01M 10/0585*** *(2010.01)*

(52) Cooperative Patent Classification (CPC):
**H01M 4/13; H01M 4/485; H01M 4/62;**
**H01M 10/052; H01M 10/0562; H01M 10/0585;**
Y02E 60/10; Y02P 70/50

(86) International application number:
**PCT/JP2021/010449**

(87) International publication number:
**WO 2021/187443 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.03.2020 JP 2020045303**

(71) Applicant: **Murata Manufacturing Co., Ltd.**
**Nagaokakyo-shi, Kyoto 617-8555 (JP)**

(72) Inventors:
- **TAKANO, Ryohei**
  **Nagaokakyo-shi, Kyoto 617-8555 (JP)**
- **KIMURA, Yoshinobu**
  **Nagaokakyo-shi, Kyoto 617-8555 (JP)**

(74) Representative: **Crickmore, Connor Scott**
**Reddie & Grose LLP**
**The White Chapel Building**
**10 Whitechapel High Street**
**London E1 8QS (GB)**

# (54) SOLID-STATE BATTERY

(57) The present invention provides a solid-state battery in which the utilization factor of a negative electrode active material at the time of charge-discharge is more sufficiently high if the content of an conductive additive is lower. The present invention relates to a solid-state battery including a positive electrode layer, a negative electrode layer, and a solid electrolyte layer interposed between the positive electrode layer and the negative electrode layer, where the negative electrode layer 2 includes an conductive additive 200 in an elongated shape in section view, made of a metal material, at 7% or more and 28% or less in area ratio with respect to the negative electrode layer.

FIG. 2

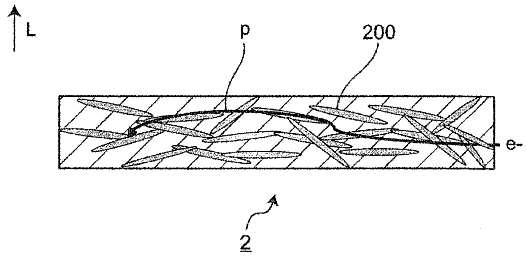




Processed by Luminess, 75001 PARIS (FR)

## Description

TECHNICAL FIELD

The present invention relates to a solid-state battery.

BACKGROUND ART

In recent years, the demand for batteries has been greatly expanded as power supplies for portable electronic devices such as mobile phones and portable personal computers. In batteries for use in such applications, electrolytes (electrolytic solutions) such as an organic solvent have been conventionally used as media for moving ions.

The batteries configured as mentioned above have, however, a risk of leaking the electrolytic solutions, and moreover have the problem with the organic solvent and the like as combustible substances for use in the electrolytic solutions. Thus, the use of solid electrolytes instead of the electrolytic solutions has been proposed. In addition, the development of a sintered-type solid-state secondary battery with a solid electrolyte used as an electrolyte and other constituent elements also composed of solids has been advanced.

Known is a technique of adding a carbon material as an conductive additive to a negative electrode layer for a solid-state battery from the viewpoint of improving the electron conductivity (Patent Document 1). In such a technique, however, the carbon material has very low sinterability and inhibits sintering for the negative electrode layer at the time of co-sintering, thus causing the problem of decreasing the utilization factor of the negative electrode active material at the time of charge-discharge.

Then, attempts have been made to promote sintering for the electrode layer and improve the utilization factor of the negative electrode active material by using a metal material as an conductive additive (Patent Documents 2 and 3) .

PRIOR ART DOCUMENT

PATENT DOCUMENTS

Patent Document 1: WO 2019/044901
Patent Document 2: WO 2019/044902
Patent Document 3: Japanese Patent No. 5644951

SUMMARY OF THE INVENTION

Problem to be solved by the invention

The inventors of the present invention have found that in such a conventional technique as mentioned above, as shown in FIG. 5, if a negative electrode layer 2' includes a spherical conductive additive 200' made of a metal material, a conductive path p' is broken (n'), thereby making a continuous conductive path unlikely to be formed, and thus failing to sufficiently improve the utilization factor of the negative electrode active material at the time of charge-discharge. For this reason, the addition of the conductive additive a larger amount is required in order to easily form the conductive path, but from the viewpoint of improving the energy density of the solid-state battery, it is not preferable to add the spherical conductive additive in a large amount. FIG. 5 is a schematic sectional view of a negative electrode layer in a solid-state battery according to the prior art for describing a conductive path of the negative electrode layer.

Under such circumstances, the inventors of the present invention have also found that the problem regarding the utilization factor of the negative electrode active material due to the use of the spherical conductive additive made of a metal material as mentioned above is significant when the negative electrode layer contains a negative electrode active material with a Li/V ratio of 2 or more. It has been determined that the use of the negative electrode active material makes balling of the conductive additive particularly likely to proceed at the time of sintering, thereby making the conductive path p' particularly likely to be caused. This is believed to be caused by the relatively low wettability between the negative electrode active material with a Li/V ratio of 2 or more and the conductive additive (in particular, metal powder).

An object of the present invention is to provide a solid-state battery in which the utilization factor of a negative electrode active material at the time of charge-discharge is more sufficiently high if the content of an conductive additive is lower.

In addition, another object of the present invention to provide a solid-state battery in which the utilization factor of a negative electrode active material at the time of charge-discharge is more sufficiently high if the negative electrode layer includes the negative electrode active material with a Li/V ratio of 2 or more and has a lower content of conductive additive.

Means for solving the problem

The present invention relates to:

a solid-state battery including a positive electrode layer, a negative electrode layer, and a solid electrolyte layer interposed between the positive electrode layer and the negative electrode layer,
where the negative electrode layer includes an conductive additive in an elongated shape in section view, made of a metal material, at 7% or more and 28% or less in area ratio with respect to the negative electrode layer.

As a result of studying approaches for forming an appropriate conductive path in the negative electrode layer with the lower content of the conductive additive, the inventors of the present invention have found the following:
It has been determined that the negative electrode layer includes an conductive additive in an elongated shape in section view, made of a metal material (preferably, the negative electrode layer appropriately orientates, in an in-plane direction, an conductive additive in an elongated shape in section view, made of a metal material), thereby allowing a conductive path to be efficiently formed. Accordingly, the negative electrode layer includes the conductive additive in an elongated shape in section view, made of a metal material, thereby allowing the utilization factor of the negative electrode active material to be increased and allowing the increased energy density of the solid-state battery to be achieved, if the content of the conductive additive is reduced.
Furthermore, it has been found that the conductive additive in an elongated shape in section view, made of a metal material is appropriately oriented in an in-plane direction in the negative electrode layer, thereby a conductive path to be formed more efficiently if the negative electrode layer has an end-surface current-collecting structure. Accordingly, the negative electrode layer including the conductive additive in an elongated shape in section view, made of a metal material, and appropriately orienting, in the in-plane direction, the conductive additive in an elongated shape in section view allow the utilization factor of the negative electrode active material to be more sufficiently increased if the content of the conductive additive is reduced. As a result, the negative electrode layer has an end-surface current-collecting structure, thereby making it possible to achieve the further increased energy density of the solid-state battery.
Furthermore, it has been determined that the negative electrode layer includes an conductive additive in an elongated shape in section view, made of a metal material (preferably, the negative electrode layer appropriately orientates, in an in-plane direction, an conductive additive in an elongated shape in section view, made of a metal material), thereby allowing a conductive path to be efficiently formed if the negative electrode layer includes the negative electrode active material with a Li/V ratio of 2 or more. Accordingly, the negative electrode layer includes the conductive additive in an elongated shape in section view, made of a metal material, thereby allowing the utilization factor of the negative electrode active material to be increased and allowing the increased energy density of the solid-state battery to be achieved, if the negative electrode layer includes the negative electrode active material with a Li/V ratio of 2 or more and has the reduced content of the conductive additive.

Advantageous effect of the invention

In the solid-state battery according to the present invention, the utilization factor of the electrode active material at the time of charge-discharge is more sufficiently high if the content of the conductive additive is lower.

BRIEF EXPLANATION OF DRAWINGS

FIG. 1A is a schematic sectional view of a solid-state battery, schematically illustrating a solid-state battery according to an embodiment of the present invention.
FIG. 1B is a schematic sectional view of a solid-state battery, schematically illustrating a solid-state battery according to another embodiment of the present invention.
FIG. 2 is a schematic sectional view of a negative electrode layer for describing a conductive path of a negative electrode layer in a solid-state battery according to the present invention.
FIG. 3A is a schematic sectional view of an conductive additive, schematically illustrating an example of an conductive additive in an elongated shape in section view, included in a negative electrode layer in a solid-state battery according to the present invention.
FIG. 3B is a schematic sectional view of an conductive additive, schematically illustrating another example of an conductive additive in an elongated shape in section view, included in a negative electrode layer in a solid-state battery according to the present invention.

FIG. 4A is a schematic sectional view of a solid-state battery, schematically illustrating a solid-state battery (main-surface current-collecting structure) according to an embodiment of the present invention, manufactured in accordance with an example.

FIG. 4B is a schematic sectional view of a solid-state battery, schematically illustrating a solid-state battery (end-surface current-collecting structure) according to another embodiment of the present invention, manufactured in accordance with an example.

FIG. 5 is a schematic sectional view of a negative electrode layer in a solid-state battery according to the prior art for describing a conductive path of the negative electrode layer.

MODE FOR CARRYING OUT THE INVENTION

[Solid-state Battery]

The present invention provides a solid-state battery. The term "solid-state battery" as used herein refers in a broad sense to a battery that has constituent elements (in particular, an electrolyte layer) composed of solids, and in a narrow sense to an "all-solid-state battery" that has constituent elements (in particular, all constituent elements) composed of solids. The "solid-state battery" as used herein encompasses a so-called "secondary battery" that can be repeatedly charged and discharged, and a "primary battery" that can be only discharged. The "solid-state battery" is preferably a "secondary battery". The "secondary battery" is not to be considered unduly restricted by the name of the secondary battery, which can encompass, for example, an "electric storage device" and the like.

As shown in FIGS. 1A and 1B, the solid-state battery according to the present invention includes a positive electrode layer 1, a negative electrode layer 2, and a solid electrolyte layer 3, and typically has a laminated structure composed of the positive electrode layer and the negative electrode layer laminated with the solid electrolyte layer interposed therebetween. Each of the positive electrode layer and the negative electrode layer may have two or more layers laminated as long as a solid electrolyte layer is provided between the positive and negative electrode layers. The solid electrolyte layer in contact with the positive electrode layer and the negative electrode layer is sandwiched therebetween. The positive electrode layer and the solid electrolyte layer may have sintered bodies sintered integrally with each other, and/or the negative electrode layer and the solid electrolyte layer may have sintered bodies sintered integrally with each other. Having sintered bodies sintered integrally with each other means that two or more members (in particular, layers) adjacent to or in contact with each other are joined by sintering. In this case, the two or more members (in particular, layers) may be all sintered bodies integrally sintered. FIGS. 1A and 1B are both schematic sectional views of a solid-state battery, schematically illustrating a solid-state battery according to an embodiment of the present invention.

As shown in FIGS. 1A and 1B, the solid-state battery according to the present invention may further include a positive electrode current-collecting layer 11, a negative electrode current-collecting layer 21, a positive electrode current collector (not shown), a negative electrode current collector 22, electrode separation parts 15 and 25, a protective layer 5, and end-surface electrodes 10 and 20. The solid-state battery in FIG. 1B is the same as the solid-state battery in FIG. 1A except that the negative electrode layer 2 has an end-surface current-collecting structure. As will be described in detail later, the end-surface current-collecting structure of the negative electrode layer 2 in FIG. 1B refers to a structure electrically connected to the negative electrode terminal 20 via the negative electrode current collector 22, in contact with the negative electrode current collector 22 at the end surface of the negative electrode layer 2. In contrast, in the solid-state battery in FIG. 1A, the negative electrode layer 2 has a main-surface current-collecting structure. As will be described in detail later, the main-surface current-collecting structure of the negative electrode layer 2 in FIG. 1A refers to a structure electrically connected to the negative electrode terminal 20 mainly via the negative electrode current-collecting layer 21, in contact with the negative electrode current-collecting layer 21 at the main surface of the negative electrode layer 2.

(Negative Electrode Layer)

The negative electrode layer 2 includes an conductive additive and a negative electrode active material, and may further contain a solid electrolyte. In the negative electrode layer, each of the conductive additive, the negative electrode active material, and the solid electrolyte preferably has the form of a sintered body. For example, when the negative electrode layer includes an conductive additive, a negative electrode active material, and a solid electrolyte, the negative electrode layer preferably has the form of a sintered body in which the conductive additive, the negative electrode active material particles, and the solid electrolyte are joined to each other by sintering, with the negative electrode active material particles bonded to each other by the conductive additive and the solid electrolyte.

The negative electrode layer contains, as the conductive additive, an conductive additive in an elongated shape in section view to have a content of 7% or more and 28% or less in terms of area ratio with respect to the negative electrode layer, and from the viewpoint of further improving the utilization factor of the negative electrode active material, to have a content of preferably 7.5% or more and 25% or less, more preferably 10% or more and 23% or less, still more preferably 150 or more and 22% or less. Particularly, as shown in FIG. 2, the negative electrode layer 2 contains an conductive additive 200 in an elongated shape in section view, thereby allowing a conductive path p to be efficiently formed. Thus, the use of the conductive additive in an elongated shape in section view allows the utilization factor of the negative electrode active material to be increased if the content of the conductive additive is relatively low, and as a result, the increased energy density of the solid-state battery can be achieved. If the content of the conductive additive is excessively low, the utilization factor of the negative electrode active material will be decreased. If the content of the conductive additive is excessively high, the energy density of the solid-state battery will be decreased. FIG. 2 is a schematic sectional view of a negative electrode layer for describing a conductive path of a negative electrode layer in a solid-state battery according to the present invention.

The content of the conductive additive in an elongated shape in section view with respect to the total conductive additive is not particularly limited, and is typically 35% or more (particularly 35% or more and 100% or less) in terms of area ratio with respect to the total conductive additive, and from the viewpoint of further improving the utilization factor of the negative electrode active material, preferably 50% or more and 95% or less, more preferably 70% or more and 90% or less.

The value of the area ratio of the conductive additive in an elongated shape in section view is used for the content of the conductive additive in an elongated shape in section view. Particularly, the content of the conductive additive in an elongated shape in section view refers to the value of the area ratio of the conductive additive in an elongated shape in section view, identified in the negative electrode layer of an SEM image (photograph) that shows the laminated structure (sectional structure) of the solid-state battery. More particularly, the content of the conductive additive in an elongated shape in section view is expressed as the average of the values measured at arbitrary ten points, which is expressed as an area ratio with respect to the negative electrode layer (that is, the total area of each field of view in the negative electrode layer) or the area ratio of the conductive additive in an elongated shape in section view with respect to the total conductive additive (that is, the area of the total conductive additive in each field of view).

The conductive additive in an elongated shape in section view means an conductive additive that has an elongated shape in a section view of the negative electrode layer. For example, the conductive additive that has an elongated shape in section view has a shape with a length direction in a section view of the negative electrode layer. The term "section view" as used herein is based on a form as viewed from a direction substantially perpendicular to a thickness direction based on the direction of laminating respective layers constituting the solid-state battery (to put it briefly, a form in the case of cutting along a face parallel to the thickness direction), and includes a sectional view. In particular, the "section view" may be based on a form in the case of cutting at a face parallel to the thickness direction based on the direction of laminating respective layers constituting the solid-state battery, which is a face perpendicular to the positive electrode terminal and the negative electrode terminal, and examples thereof include such section views as shown in FIGS. 1A and 1B. Accordingly, the "SEM image that shows the laminated structure (sectional structure) of the solid-state battery" for use in various measurements may be an image based on such a section view as described above.

As an conductive additive that may have an elongated shape in section view, for example, a flattened conductive additive, a fibrous conductive additive, or a mixture thereof is used. In the case of using a simple metal powder as the conductive additive, the metal powder is made into balls (in particular, spheroidized) in the negative electrode layer at the time of sintering, thus making it difficult to obtain a sufficient negative electrode active material utilization factor. In the present invention, as the conductive additive, the flattened or fibrous conductive additive is used, thus keeping the agent from being made into balls (in particular, spheroidized) at the time of sintering, allowing the conductive additive to have an elongated shape in section view after the sintering, and allowing a sufficient negative electrode active material utilization factor to be easily obtained. In the solid-state battery according to the present invention, which material of the flattened conductive additive, the fibrous conductive additive, or a mixture thereof the conductive additive in an elongated shape in section view corresponds to can be easily recognized by disassembling the solid-state battery.

In short, the flattened shape is such a shape of as particle crushed, which is also referred to as a "scaly shape" or a " flat-plate shape".

The fibrous shape is a shape including a "linear shape" or a "rod shape", and may be, for example, the shape of a so-called metal nanowire.

Also in the case of using only a metal powder (for example, a spherical conductive additive) as the conductive additive, some metal powders may be bonded to each other by sintering in the negative electrode layer, resulting in having an elongated shape in section view. When the negative electrode layer contains only a metal powder in a content of 28% or less in terms of percentage with respect to the negative electrode layer, however, the content of the conductive additive in an elongated shape in section view is typically 4% or less in terms of percentage with respect to the negative electrode layer (or 10% or less in terms of area ratio with respect to the total conductive additive), thus failing to achieve the content of the conductive additive in an elongated shape in section view as mentioned above as in the present invention.

The conductive additive in an elongated shape in section view has, particularly, a shape defined by a longest dimension a and a short-side length (thickness dimension) b for one conductive additive 200a in section view as shown in FIG. 3A in the negative electrode layer, and the depth length c (that is, a dimension in the front-back direction on FIG. 3A) (not shown) thereof is not particularly limited. The longest dimension a is a dimension that defines a maximum length in section view. The short-side length b is a dimension that defines a maximum length (or maximum thickness) in a direction perpendicular to the direction of the longest dimension a in section view. The short-side length b typically satisfies $a > b$. The depth length c is a dimension that defines a maximum length in a direction perpendicular to the section view, and typically satisfies $c \geq 2b$ (in particular, $2a \geq c \geq 2b$) in the case of a flattened shape, and satisfies $2b > c$ (in particular, $2b > c > 0.5b$) in the case of a fibrous shape. The elongated shape in section view particularly refers to a shape with a/b of 2.0 or more (in particular, 2.0 or more and 20.0 or less). FIG. 3A is a schematic sectional view of an conductive additive, schematically illustrating an example of an conductive additive in an elongated shape in section view, included in the negative electrode layer in the solid-state battery according to the present invention.

The elongated shape in section view includes a bent elongated shape provided with a bent part. Particularly, the bent elongated shape has a shape defined by a longest dimension a and a short-side length (thickness dimension) b with one or more bent parts 201 for one conductive additive 200b in the negative electrode layer in section view as shown in FIG. 3B, and the depth length c (that is, a dimension in the front-back direction on FIG. 3B) (not shown) thereof is not particularly limited. Also in the bent elongated shape, the longest dimension a is a dimension that defines a maximum length in section view. The short-side length b is a dimension that defines a maximum length (or maximum thickness) in a direction perpendicular to the direction of the longest dimension a in section view. The depth length c is a dimension that defines a maximum length in planar view perpendicular to the section view. a, b and c in the bent elongated shape (for example, FIG. 3B) and the relationships are similar to those in the simple elongated shape in section view (for example, FIG. 3A). FIG. 3B is a schematic sectional view of an conductive additive, schematically illustrating another example of an conductive additive in an elongated shape in section view, included in the negative electrode layer in the solid-state battery according to the present invention.

For the conductive additive in an elongated shape in section view in the negative electrode layer, the average aspect ratio (longest dimension a/short-side length b mentioned above) is typically 2.0 or more (in particular, 2.0 or more and 20.0 or less), and from the viewpoint of further improving the utilization factor of the negative electrode active material, preferably 2.0 or more and 15.0 or less, more preferably 2.5 or more and 10.0 or less, still more preferably 3.0 or more and 8.0 or less.

For the average aspect ratio (a/b) of the conductive additive in an elongated shape in section view, an average value is used, based on arbitrary hundred conductive additives in an elongated shape in section view, identified in the negative electrode layer of an SEM image (photograph) that shows the laminated structure (sectional structure) of the solid-state battery.

In the conductive additive in an elongated shape in section view in the negative electrode layer, the average short-side length b is not particularly limited, and from the viewpoint of further improving the utilization factor of the negative electrode active material, is preferably 0.1 um or more and 4.0 um or less, more preferably 0.2 um or more and 2.0 um or less, still more preferably 0.3 um or more and 1.5 um or less, particularly preferably 0.3 um or more and 1.0 um or less.

For the average short-side length b of the conductive additive in an elongated shape in section view, an average value is used, based on arbitrary hundred conductive additives in an elongated shape in section view, identified in the negative electrode layer of an SEM image (photograph) that shows the laminated structure (sectional structure) of the solid-state battery.

For the conductive additive in an elongated shape in section view in the negative electrode layer, the average depth length c is not particularly limited, and may be, for example, 0.1 um or more and 10.0 um or less. For example, in the case of using a flattened conductive additive as the conductive additive, the average depth length c of the conductive additive in an elongated shape in section view in the negative electrode layer is typically 0.1 um or more and 20 um or less. Alternatively, for example, in the case of using a fibrous conductive additive as the conductive additive, the average depth length c of the conductive additive in an elongated shape in section view in the negative electrode layer is typically 0.1 μm or more and 10.0 μm or less.

For the average depth length c of the conductive additive in an elongated shape in section view, an average value can be used, based on arbitrary hundred conductive additives in an elongated shape in section view, identified in the negative electrode layer of a three-dimensional image created from hundred SEM images taken at intervals of 0.1 μm, showing the laminated structure (sectional structure) of the solid-state battery.

In the conductive additive in an elongated shape in section view in the negative electrode layer, the conductive additive with an orientation angle of 30° or less is included at preferably 20% or more (in particular, 20% or more and 100% or less), more preferably 50% or more and 90% or less, still more preferably 55% or more and 75% or less, most preferably 610 or more and 66% or less in terms of area ratio with respect to the total conductive additive, from the viewpoint of further improving the utilization factor of the negative electrode active material.

The orientation angle of the conductive additive in an elongated shape in section view refers to the absolute value of an angle (in particular, smaller angle) made by the direction of the longest dimension a of the conductive additive and the horizontal direction, assuming that the solid-state battery is allowed to stand such that the laminating direction L of the positive electrode layer, the solid electrolyte layer, the negative electrode layer, and the like is perpendicular to the horizontal direction. For example, assuming that the vertical direction in FIG. 3A is parallel to the laminating direction L, the orientation angle of the conductive additive 200a in an elongated shape in section view is 0°. In addition, for example, assuming that the vertical direction in FIG. 3B is parallel to the laminating direction L, the orientation angle of the conductive additive 200b in an elongated shape in section view is θ. The conductive additive for use in the present invention has an elongated shape in section view, and the negative electrode layer containing the conductive additive in the elongated shape in section view has such an extremely small thickness as described later, and thus, most (for example, 50% or more, particularly 60% or more in are ratio) of the conductive additive in the elongated shape in section view typically has an orientation angle of 30° or less in the negative electrode layer.

For the orientation angle of the conductive additive in an elongated shape in section view, a value is used, which is identified in the negative electrode layer of an SEM image (photograph) that shows the laminated structure (sectional structure) of the solid-state battery.

The content of the conductive additive with an orientation angle of 30° or less in the conductive additive in an elongated shape in section view in the negative electrode layer with respect to the total conductive additive refers to the value of the area ratio of the conductive additive in an elongated shape in section view with an orientation angle of 30° or less, identified in the negative electrode layer of an SEM image (photograph) that shows the laminated structure (sectional structure) of the solid-state battery, with respect to the total conductive additive. More particularly, the content of the conductive additive in an elongated shape in section view with an orientation angle of 30° or less is expressed as the average of the values measured at arbitrary ten points, which is expressed as the area ratio of the conductive additive in an elongated shape in section view with an orientation angle of 30° or less with respect to the total conductive additive (that is, the area of the total conductive additive in each field of view).

The conductive additive in an elongated shape in section view is made of a metal material. Examples of the metal material that can constitute the conductive additive in an elongated shape in section view include one or more metal materials selected from the group consisting of Ag (silver), Au (gold), Pd (palladium), Pt (platinum), Cu (copper), Sn (tin), Ni (nickel), and alloys thereof. The conductive additive in an elongated shape in section view is preferably made of silver from the viewpoint of further improving the utilization factor of the negative electrode active material.

The negative electrode layer may further contain another conductive additive other than the conductive additive in an elongated shape in section view. Examples of the other conductive additive include a spherical conductive additive made of a metal material that is similar to the metal material constituting the conductive additive in an elongated shape in section view, and carbon materials such as carbon nanotubes such as acetylene black, Ketjen black, Super P (registered trademark), and VGCF (registered trademark).

The negative electrode layer contains the total conductive additive including the conductive additive in an elongated shape in section view and the other conductive additive in a content of preferably 30% or less (particularly 5% or more and 30% or less), more preferably 120 or more and 30% or less, still more preferably 18% or more and 28% or less, in terms of area ratio with respect to the negative electrode layer, from the viewpoint of further improving the utilization factor of the negative electrode active material.

For the content of the total conductive additive, the value of the area ratio of the total conductive additive is used. Particularly, the content of the total conductive additive refers to the value of the area ratio of the total conductive additive, identified in the negative electrode layer of an SEM image (photograph) that shows the laminated structure (sectional structure) of the solid-state battery. More particularly, the content of the total conductive additive refers to the average of the values measured at arbitrary ten points, which is the ratio of the area of the total conductive additive to the total area of each field of view in the negative electrode layer.

The negative electrode layer is a layer capable of occluding and releasing metal ions, preferably a layer capable of occluding and releasing lithium ions. The negative electrode active material included in the negative electrode layer is not particularly limited, and from the viewpoints of further improving the utilization factor of the negative electrode active material and improving the discharge capacity, it is preferable to include a negative electrode active material in which the molar ratio of Li (lithium) to V (vanadium) is 2.0 or more (particularly 2 or more and 10 or less). The molar ratio of Li to V in the negative electrode active material is preferably 2 or more and 6 or less (particularly 2 or more and 4 or less) from the viewpoint of further improving the utilization factor of the negative electrode active material. In the present invention, it is particularly effective for the negative electrode layer to include a negative electrode active material that has such a molar ratio. When the negative electrode layer includes a negative electrode active material in accordance with such a molar ratio, balling (for example, spheroidization) of the conductive additive is particularly likely to proceed at the time of sintering due to low wettability to the conductive additive, the conductive path p' is particularly likely to be broken, and the utilization factor of the negative electrode active material is further decreased. In the present invention, however, also when the negative electrode layer includes such a negative electrode active material, the breakage of the conductive path can be sufficiently suppressed, and as a result, the utilization factor of the negative electrode active material at the time of charge and discharge can be more sufficiently improved by the conductive additive in a smaller amount. Accordingly, when the negative electrode layer includes the negative electrode active material in accordance with the molar ratio mentioned above, the effect of having the form of the conductive additive in an elongated shape in section view is particularly enhanced in the present invention.

In the present invention, in the solid-state battery in which the negative electrode layer includes a negative electrode active material with the molar ratio of Li to V in the range mentioned above, and in which the solid electrolyte layer includes a solid electrolyte that has a LISICON-type structure as described later, the LISICON-type solid electrolyte of the solid electrolyte layer contains V, thereby providing better bondability between the solid electrolyte layer and the negative electrode layer. Furthermore, side reactions at the time of co-sintering between the negative electrode active material included in the negative electrode layer and the LISICON-type solid electrolyte in the solid electrolyte layer are inhibited, thereby allowing the reversible capacity of the solid-state battery to be increased. As a result, the utilization factor of the negative electrode active material at the time of charge and discharge can be more sufficiently increased.

From the viewpoint of further improving the utilization factor of the negative electrode active material, the negative electrode active material preferably has an average chemical composition represented by General Formula (1):
[Chemical Formula 1]

$$(Li_{[3-ax+(5-b)(1-y)]}A_x)(V_yB_{1-y})O_4 \qquad (1)$$

Such a composition is employed, thereby allowing the reactivity with the LISICON-type solid electrolyte in the solid electrolyte layer to be further sufficiently reduced. In addition, the negative electrode active material for use in the present invention exhibits a further sufficient capacity from redox of V. Accordingly, in order to obtain a sufficient reversible capacity, the V amount y is preferably $0.5 \leq y \leq 1.0$ as described later. When the negative electrode active material has the composition mentioned above, the negative electrode active material has only to have such an average composition as mentioned above in the thickness direction of the negative electrode layer, and the chemical composition may vary in the thickness direction of the negative electrode layer.

In the formula (1), A represents one or more elements selected from the group consisting of Na (sodium), K (potassium), Mg (magnesium), Ca (calcium), and Zn (zinc).

B represents one or more elements selected from the group consisting of Zn (zinc), Al (aluminum), Ga (gallium), Si (silicon), Ge (germanium), Sn (tin), P (phosphorus), As (arsenic), Ti (titanium), Mo (molybdenum), W (tungsten), Fe (iron), Cr (chromium), and Co (cobalt).
x has a relationship of $0 \leq x \leq 1.0$, preferably a relationship of $0 \leq x \leq 0.5$, more preferably a relationship of $0 \leq x \leq 0.1$.
y has a relationship of $0.5 \leq y \leq 1.0$, preferably a relationship of $0.55 \leq y \leq 1.0$, and is more preferably 1.
a is the average valence of A. The average valence of A is, for example, a value represented by $(n1 \times a + n2 \times b + n3 \times c)/(n1 + n2 + n3)$, when n1 elements X with a valence a+, n2 elements Y with a valence b+, and n3 elements Z with a valence c+ are identified as A.
b is the average valence of B. The average valence of B is, for example, the same value as the above-mentioned average valence of A, when n1 elements X with a valence a+, n2 elements Y with a valence b+, and n3 elements Z with a valence c+ are identified as B.

In the formula (1), from the viewpoints of improving the availability of the negative electrode active material and further improving the utilization factor of the negative electrode active material, preferred embodiments are presented as follows:

A represents one or more elements selected from the group consisting of Al and Zn.
B represents one or more, in particular, two, elements selected from the group consisting of Si and P.
x has a relationship of $0 \leq x \leq 0.06$, and is more preferably 0.
y has a relationship of $0.55 \leq y \leq 1.0$, more preferably $0.8 \leq y \leq 1.0$, is still more preferably 1.
a is the average valence of A.
b is the average valence of B.

Specific examples of the negative electrode active material include $Li_3VO_4$, $Li_{3.2}(V_{0.8}Si_{0.2})O_4$, $(Li_{3.1}Al_{0.03})(V_{0.8}Si_{0.2})O_4$, $(Li_{3.1}Zn_{0.05})(V_{0.8}Si_{0.2})O_4$, $Li_{3.3}(V_{0.6}P_{0.1}Si_{0.3})O_4$, $Li_{3.18}(V_{0.77}P_{0.05}Si_{0.18})O_4$, $Li_{3.07}(V_{0.90}P_{0.03}Si_{0.07})O_4$, and $Li_{3.22}(V_{0.72}P_{0.0s}Si_{0.22})O_4$.

The chemical composition of the negative electrode active material may be an average chemical composition.

The average chemical composition of the negative electrode active material means the average value for the chemical composition of the negative electrode active material in the thickness direction of the negative electrode layer. The average chemical composition of the negative electrode active material can be analyzed and measured by breaking the solid-state battery and performing a composition analysis in accordance with EDX with the use of SEM-EDX (energy dispersive X-ray spectroscopy) in a field of view in which the negative electrode layer is all included in the thickness direction.

In the negative electrode layer, the average chemical composition of the negative electrode active material and the average chemical composition of the solid electrolyte described later can be automatically distinguished and then measured depending on the compositions thereof in the composition analysis mentioned above.

The negative electrode active material can be produced, for example, by the following method. First, a raw material compound containing a predetermined metal atom is weighed so as to provide a predetermined chemical composition, and water is added thereto and mixed therewith to obtain a slurry. The slurry is dried, subjected to calcination at 700°C or higher and 1000°C or lower for 4 hours or longer and 6 hours or shorter, and subjected to grinding, thereby allowing a negative electrode active material to be obtained.

As for the chemical composition of the negative electrode active material, for example, in the case of highspeed sintering at 750°C for about 1 minute together with the solid electrolyte layer, the chemical composition of the negative electrode active material used at the time of manufacture is reflected as it is, but in the case of sintering at 750°C for a long period of time on the order of 1 hour, the element diffusion into the solid electrolyte layer proceeds, thereby typically reducing the V amount.

The negative electrode active material preferably has a $\beta_{II}$-$Li_3VO_4$-type structure or a $\gamma_{II}$-$Li_3VO_4$-type structure from the viewpoint of further improving the utilization factor of the negative electrode active material. Having such a crystal structure improves the reversibility of charge and discharge, thereby allowing stable cycle characteristics to be obtained. In addition, the active material has a $\gamma_{II}$-$Li_3VO_4$-type structure, thereby improving the bondability to the LISICON-type solid electrolyte in the solid electrolyte layer, which is more preferred.

The fact that the negative electrode active material has a $\beta_{II}$-$Li_3VO_4$-type structure means that the negative electrode active material (in particular, particles thereof) has a $\beta_{II}$-$Li_3VO_4$-type crystal structure, and in a broad sense, refers to the fact that the negative electrode active material has a crystal structure that can be identified as a $\beta_{II}$-$Li_3VO_4$-type crystal structure by those skilled in the field of solid-state batteries. In a narrow sense, the fact that the negative electrode active material has a $\beta_{II}Li_3VO_4$-type structure means that the negative electrode active material (in particular, particles thereof) exhibits, at a predetermined incident angle, one or more main peaks corresponding to a Miller index that is unique to a so-called $\beta_{II}$-$Li_3VO_4$-type crystal structure in X-ray diffraction. Examples of the negative electrode active material that has a $\beta_{II}$-$Li_3VO_4$-type structure include ICDD Card No. 01-073-6058.

The fact that the negative electrode active material has a $\gamma_{II}$-$Li_3VO_4$-type structure means that the negative electrode active material (in particular, particles thereof) has a $\gamma_{II}$-$Li_3VO_4$-type crystal structure, and in a broad sense, refers to the fact that the negative electrode active material has a crystal structure that can be identified as a $\gamma_{II}$-$Li_3VO_4$-type crystal structure by those skilled in the field of solid-state batteries. In a narrow sense, the fact that the negative electrode active material has a $\gamma_{II}Li_3VO_4$-type structure means that the negative electrode active material (in particular, particles thereof) exhibits, at a predetermined incident angle, one or more main peaks corresponding to a Miller index that is unique to a so-called $\gamma_{II}$-$Li_3VO_4$-type crystal structure in X-ray diffraction. Examples of the negative electrode active material that has a $\gamma_{II}$-$Li_3VO_4$-type structure include ICDD Card No. 01-073-2850.

The average chemical composition and crystal structure of the negative electrode active material in the negative electrode layer are typically changed by element diffusion at the time of sintering. The negative electrode active material preferably has the average chemical composition and crystal structure mentioned above in the solid-state battery subjected to sintering together with the positive electrode layer and the solid electrolyte layer.

The average particle size of the negative electrode active material is not particularly limited, may be, for example, 0.01 um or more and 20 um or less, and is preferably 0.1 um or more and 5 um or less.

For the average particle size of the negative electrode active material, for example, 10 or more and 100 or less particles are randomly selected from the SEM image, and the particle sizes are simply averaged to determine the average particle size (arithmetic average).

The particle size is considered the diameter of the spherical particle, assuming that the particle is perfectly spherical. For such a particle size, for example, a cross section of the solid-state battery is cut out, a sectional SEM image is taken with the use of an SEM, the sectional area S of the particle is then calculated with the use of image analysis software (for example, "Azo-kun" (from Asahi Kasei Engineering Corporation)), and then, the particle diameter R can be determined by the following formula:

[Mathematical Formula 1]

$$R = 2 \times (S / \pi)^{1/2}$$

It is to be noted that the average particle size of the negative electrode active material in the negative electrode layer can be automatically measured by specifying the negative electrode active material depending on the composition, at the time of measuring the average chemical composition mentioned above.

The volume percentage of the negative electrode active material in the negative electrode layer is not particularly limited, and is preferably 20% or more and 80% or less, more preferably 30% or more and 75% or less, still more preferably 30% or more and 60% or less, from the viewpoint of further improving the utilization factor of the negative electrode active material.

The volume percentage of the negative electrode active material in the negative electrode layer can be measured from an SEM image after FIB sectional processing. Particularly, the cross section of the negative electrode layer is observed with the use of SEM-EDX. It is possible to measure the volume percentage of the negative electrode active material by determining, from EDX, that the site where V is detected is the negative electrode active material and calculating the area ratio of the site.

The particle shape of the negative electrode active material in the negative electrode layer is not particularly limited, and may be, for example, any of a spherical shape, a flattened shape, and an indefinite shape.

The negative electrode layer preferably further includes a solid electrolyte, in particular, a solid electrolyte that has a garnet-type structure. The negative electrode layer includes the garnet-type solid electrolyte, thereby allowing the ionic conductivity of the negative electrode layer to be increased, and allowing an increased rate to be expected. In addition, side reactions at the time of co-firing with the negative electrode active material with a Li/V ratio of 2 or more can be suppressed, and the utilization factor of the negative electrode can be thus expected to be improved. As described later, the solid electrolyte layer also preferably further includes a solid electrolyte, in particular, a solid electrolyte that has a garnet-type structure. This is because the solid electrolyte layer includes the garnet-type solid electrolyte, thereby the insulating property of the solid electrolyte layer to be improved. This is believed to be because the garnet-type solid electrolyte is less likely to be reduced during charging and discharging, thus making electrons less likely to be injected, and because the bent degree of the LISICON-type solid electrolyte in the solid electrolyte is increased, thereby increasing the electronic resistance. In addition, side reactions at the time of co-firing with the negative electrode active material with a Li/V ratio of 2 or more can be suppressed, and the utilization factor of the negative electrode can be thus expected to be improved. Accordingly, at least one (in particular, both) of the negative electrode layer and the solid electrolyte layer preferably includes a solid electrolyte that has a garnet-type structure. The fact that at least one of the negative electrode layer and the solid electrolyte layer includes the solid electrolyte that has a garnet-type structure means that one of the negative electrode layer and the solid electrolyte layer may include the solid electrolyte that has a garnet-type structure, or that the both may include the solid electrolyte that has a garnet-type structure.

The fact that the solid electrolyte has a garnet-type structure means that the solid electrolyte has a crystal structure, and in a broad sense, refers to the fact that the negative electrode active material has a crystal structure that can be identified as a garnet-type crystal structure by those skilled in the field of solid-state batteries. In a narrow sense, the fact that the solid electrolyte has a garnet-type structure means that the solid electrolyte exhibits, at a predetermined incident angle, one or more main peaks corresponding to a Miller index that is unique to a so-called garnet-type crystal structure in X-ray diffraction.

In the negative electrode layer, the solid electrolyte that has a garnet-type structure preferably has an average chemical composition represented by General Formula (2):

[Chemical Formula 2]

$$(Li_{[7-ax-(b-4)y]}A_x)La_3Zr_{2-y}B_yO_{12} \qquad (2)$$

The negative electrode layer includes the solid electrolyte that has such an average chemical composition as mentioned above, thereby allowing the further improved utilization factor of the negative electrode active material to be achieved.

In the formula (2), A represents one or more elements selected from the group consisting of Ga (gallium), Al (aluminum), Mg (magnesium), Zn (zinc), and Sc (scandium).

B represents one or more elements selected from the group consisting of Nb (niobium), Ta (tantalum), W (tungsten), Te (tellurium), Mo (molybdenum), and Bi (bismuth).
x has a relationship of $0 \le x \le 0.5$.
y has a relationship of $0 \le y \le 2.0$.

a is the average valence of A, and is the same as the average valence of A in the formula (1).
b is the average valence of B, and is the same as the average valence of B in the formula (1).

In the formula (2), from the viewpoint of further improving the utilization factor of the negative electrode active material, preferred embodiments are presented as follows:

A represents one or more elements selected from the group consisting of Ga and Al.
B represents one or more elements selected from the group consisting of Nb, Ta, W, Mo, and Bi.
x has a relationship of $0 \leq x \leq 0.3$, preferably 0.
y has a relationship of $0 \leq y \leq 1.0$, preferably a relationship of $0 \leq y \leq 0.7$, more preferably a relationship of $0.3 \leq y \leq 0.7$, and is preferably 0.5.
a is the average valence of A.
b is the average valence of B.

Specific examples of the solid electrolyte represented by the general formula (2) include $(Li_{6.4}Ga_{0.05}Al_{0.15})La_3Zr_2O_{12}$, $(Li_{6.4}Ga_{0.2})La_3Zr_2O_{12}$, $Li_{6.4}La_3(Zr_{1.6}Ta_{0.4})O_{12}$, $(Li_{6.4}Al_{0.2})La_3Zr_2O_{12}$, $Li_{6.5}La_3(Zr_{1.5}Mo_{0.25})O_{12}$, and $Li_{6.5}La_3(Zr_{1.5}Ta_{0.5})O_{12}$.

The average chemical composition of the solid electrolyte (in particular, the solid electrolyte that has a garnet-type structure) in the negative electrode layer means the average value for the chemical composition of the solid electrolyte in the thickness direction of the negative electrode layer. The average chemical composition of the solid electrolyte can be analyzed and measured by breaking the solid-state battery and performing a composition analysis in accordance with EDX with the use of SEMEDX (energy dispersive X-ray spectroscopy) in a field of view in which the negative electrode layer is all included in the thickness direction.

In the negative electrode layer, the average chemical composition of the negative electrode active material and the average chemical composition of the solid electrolyte can be automatically distinguished and then measured depending on the compositions thereof in the composition analysis mentioned above.

The solid electrolyte of the negative electrode layer can be obtained in the same manner as the negative electrode active material except that a raw material compound containing a predetermined metal atom is used, or is also available as a commercially available product.

The average chemical composition and crystal structure of the solid electrolyte in the negative electrode layer are typically changed by element diffusion at the time of sintering. The solid electrolyte preferably has the average chemical composition and crystal structure mentioned above in the solid-state battery subjected to sintering together with the positive electrode layer and the solid electrolyte layer.

The volume percentage of the solid electrolyte (in particular, the solid electrolyte that has a garnet-type structure) in the negative electrode layer is not particularly limited, and is preferably 100 or more and 50% or less, more preferably 20% or more and 40% or less, from the viewpoint of the balance between further improved utilization factor of the negative electrode active material and the increased energy density of the solid-state battery.

The volume percentage of the solid electrolyte in the negative electrode layer can be measured in the same manner as the volume percentage of the negative electrode active material. Being the garnet-type solid electrolyte is based on a site where Zr and/or La is detected by EDX.

The negative electrode layer may further contain, for example, a sintering aid and an conductive additive in addition to the negative electrode active material and the solid electrolyte.

The negative electrode layer contains a sintering aid, thereby allowing densification also at the time of sintering at a lower temperature, and allowing the suppression of element diffusion at the interface between the negative electrode active material and the solid electrolyte layer. For the sintering aid, sintering aids known in the field of solid-state batteries can be used. From the viewpoint of further improving the utilization factor of the negative electrode active material, as a result of studies by the inventors, the composition of the sintering aid preferably contains at least Li (lithium), B (boron), and O (oxygen), where the molar ratio (Li/B) of Li to B is 2.0 or more. These sintering aids have low-melting properties, and promoting liquid-phase sintering allows the negative electrode layer to be densified at a lower temperature. In addition, the above-mentioned composition is employed, thereby allowing for further inhibiting the side reaction between the sintering aid and the LISICON-type solid electrolyte for use in the present invention at the time of co-sintering. Examples of sintering aids that satisfy these conditions include $Li_3BO_3$, $(Li_{2.7}Al_{0.3})BO_3$, and $Li_{2.8}(B_{0.8}C_{0.2})O_3$. Among these examples, it is particularly preferable to use $(Li_{2.7}Al_{0.3})BO_3$ with a particularly high ionic conductivity.

The volume percentage of the sintering aid in the negative electrode layer is not particularly limited, and is preferably 0.1% or more and 10% or less, more preferably 1% or more and 7% or less, from the viewpoint of the balance between further improved utilization factor of the negative electrode active material and the increased energy density of the solid-state battery.

The volume percentage of the sintering aid in the negative electrode layer can be measured in the same manner as the volume percentage of the negative electrode active material. As an element detected by EDX for the determination of a region with the sintering aid, attention can be focused on B.

In the negative electrode layer, the porosity is not particularly limited, and is preferably 20% or less, more preferably 15% or less, still more preferably 10% or less from the viewpoint of further improved utilization factor of the negative electrode active material.

For the porosity of the negative electrode layer, a value measured from an SEM image after FIB sectional processing is used.

The negative electrode layer typically has a thickness of 2 um or more and 100 um or less, preferably 2 um or more and 50 um or less.

The negative electrode layer 2 may have an end-surface current-collecting structure as shown in FIG. 1A, or may have a main-surface current-collecting structure as shown in FIG. 1B. The negative electrode layer preferably has an end-surface current-collecting structure from the viewpoint of further improving the capacity density (for example, energy density).

The fact that the negative electrode layer 2 has an end-surface current-collecting structure means that the negative electrode layer 2 has, at the negative electrode terminal 20, a structure for current collection on the end surface 2a (in particular, only the end surface) of the negative electrode layer 2. Particularly, for example, as shown in FIG. 1B, the negative electrode layer 2 may be electrically connected to the negative electrode terminal 20 via the negative electrode current collector 22, in contact with the negative electrode current collector 22 at the end surface 2a (in particular, only the end surface) of the negative electrode layer 2 at the negative electrode terminal 20, or may be directly and electrically connected to the negative electrode terminal 20 at the end surface 2a (in particular, only the end surface) of the negative electrode layer 2 at the negative electrode terminal 20. From the viewpoint of more sufficiently ensuring the electrical connection to the negative electrode terminal 20, the negative electrode layer 2 is preferably, as shown in FIG. 1B, electrically connected to the negative electrode terminal 20 via the negative electrode current collector 22, in contact with the negative electrode current collector 22 at the end surface 2a (in particular, only the end surface) of the negative electrode layer 2 at the negative electrode terminal 20.

In the end-surface current-collecting structure of the negative electrode layer 2, when the negative electrode layer 2 is electrically connected to the negative electrode terminal 20 via the negative electrode current collector 22, the negative electrode layer 2 and the negative electrode current collector 22 have end surfaces in contact with each other, and as a result, have configurations adjacent to each other in a direction perpendicular to the laminating direction in section view. The negative electrode layer 2 and the negative electrode current collector 22 also have configurations adjacent to each other in a direction perpendicular to the laminating direction in planar view.

In the end-surface current-collecting structure of the negative electrode layer 2, when the negative electrode layer 2 is electrically connected to the negative electrode terminal 20 via the negative electrode current collector 22, the negative electrode current collector 22 typically has an upper surface 22b that is flush with the upper surface 2b of the negative electrode layer 2 in the laminating direction L and has a lower surface 22c that is flush with the lower surface 2c of the negative electrode layer 2 in the laminating direction L. The term "flush" means that there is no step between two faces. The two surfaces refer to the upper surface 2b of the negative electrode layer 2 and the upper surface 22b of the negative electrode current collector 22, and to the lower surface 2c of the negative electrode layer 2 and the lower surface 22c of the negative electrode current collector 22.

The fact that the negative electrode layer 2 has a main-surface current-collecting structure means that the negative electrode layer 2 has a structure for current collection on the main surface of the negative electrode layer. Particularly, as shown in FIG. 1A, the negative electrode layer 2 is electrically connected to the negative electrode terminal 20 via the negative electrode current-collecting layer 21, in contact with the negative electrode current-collecting layer 21 at the main surface 2x of the negative electrode layer 2. In the main-surface current-collecting structure of the negative electrode layer 2, the negative electrode current-collecting layer 21 may be laminated on the main surface of the negative electrode layer 2, and/or the negative electrode layer 2 may be laminated on the main surface of the negative electrode current-collecting layer 21. The main surface refers to a surface that has a relatively large area, particularly, an upper surface and/or a lower surface perpendicular to the laminating direction. The current collection on the main surface means that electrons are emitted to and injected mainly from the main surface. In FIG. 1A, the negative electrode layer 2 is, at the negative electrode terminal 20, directly electrically connected to the negative electrode terminal 20, but may be electrically connected to the negative electrode terminal 20 via the negative electrode current collector, as with the negative electrode layer in the end-surface current-collecting structure. When the negative electrode layer 2 has a main-surface current-collecting structure, the negative electrode layer 2 may be, as shown in FIG. 1A, laminated on both main surfaces of the negative electrode current-collecting layer 21, or may be laminated on one of the main surfaces.

The negative electrode current-collecting layer 21 and the negative electrode current collector 22, which can be provided for the negative electrode layer 2, include at least a conductive material. The negative electrode current-collecting layer 21 and the negative electrode current collector 22 may further contain a solid electrolyte. In a preferred aspect, the negative electrode current-collecting layer 21 and the negative electrode current collector 22 are composed of a sintered body including at least a conductive material and a solid electrolyte. As the conductive material, which may be included in the negative electrode current-collecting layer 21 and the negative electrode current collector 22, a material with a relatively high conductivity is typically used, and it is preferable to use at least one selected from the group consisting of a carbon material, silver, palladium, gold, platinum, aluminum, copper, and nickel, for example. The solid electrolyte, which may be included in the negative electrode current-collecting layer 21 and the negative electrode current collector 22, may be selected from the same solid electrolytes as the solid electrolytes, which may be included in the negative electrode layer mentioned above.

The negative electrode current-collecting layer 21 and the negative electrode current collector 22 preferably have the form of a sintered body from the viewpoints of reducing the manufacturing cost of the solid-state battery by integral sintering and reducing the internal resistance of the solid-state battery. When the negative electrode current-collecting layer 21 and the negative electrode current collector 22 have the form of a sintered body, for example, the negative electrode current-collecting layer 21 and the negative electrode current collector 22 may be composed of a sintered body further containing a sintering aid in addition to the conductive material and solid electrolyte mentioned above. The sintering aid included in the negative electrode current-collecting layer 21 and the negative electrode current collector 22 may be selected from, for example, the same materials as the sintering aids, which can be included in the negative electrode layer.

The thickness of the negative electrode current-collecting layer is not particularly limited, and may be, for example, 1 um or more and 10 um or less, preferably 1 um or more and 5 um or less, particularly 1 um or more and 3 um or less.

The thickness of the negative electrode current collector may typically have the same thickness as the negative electrode layer.

The negative electrode layer is a layer, which can also be referred to as a "negative electrode active material layer".

The negative electrode layer is preferably a layer capable of occluding and releasing lithium ions as mentioned above, but the present invention is not considered keeping the negative electrode layer from serving as a layer capable of occluding and releasing sodium ions.

(Positive Electrode Layer)

In the present invention, the positive electrode layer 1 is not particularly limited. For example, the positive electrode layer 1 contains a positive electrode active material. The positive electrode layer 1 preferably has the form of a sintered body including positive electrode active material particles.

The positive electrode layer is a layer capable of occluding and releasing metal ions, preferably a layer capable of occluding and releasing lithium ions. The positive electrode active material is not particularly limited, and positive electrode active materials known in the field of solid-state batteries can be used. Examples of the positive electrode active material include lithium-containing phosphate compound particles that have a NASICON-type structure, lithium-containing phosphate compound particles that have an olivine-type structure, lithium-containing layered oxide particles, lithium-containing oxide particles which have a spinel-type structure. Specific examples of the preferably used lithium-containing phosphate compounds that have a NASICON-type structure include $Li_3V_2(PO_4)_3$. Specific examples of the preferably used lithium-containing phosphate compounds that have an olivine-type structure include $Li_3Fe_2(PO_4)_3$ and $LiMnPO_4$. Specific examples of the preferably used lithium-containing layered oxide particles include $LiCoO_2$ and $LiCo_{1/3}Ni_{1/3}Mn_{1/3}O_2$. Specific examples of the preferably used lithium-containing oxides that have a spinel-type structure include $LiMn_2O_4$ and $LiNi_{0.5}Mn_{1.5}O_4$, and $Li_4Ti_5O_{12}$. From the viewpoint of reactivity at the time of co-sintering with the LISICON-type solid electrolyte for use in the present invention, a lithium-containing layered oxide such as $LiCoO_2$, $LiCo_{1/3}Ni_{1/3}Mn_{1/3}O_2$ is more preferably used as the positive electrode active material. It is to be noted that only one of these positive electrode active material particles may be used, or two or more thereof may be used in mixture.

The fact that the positive electrode active material has a NASICON-type structure in the positive electrode layer means that the positive electrode active material (in particular, particles thereof) has a NASICON-type crystal structure, and in a broad sense, refers to the fact that the negative electrode active material has a crystal structure that can be identified as a NASICON-type crystal structure by those skilled in the field of solid-state batteries. In a narrow sense, the fact that the positive electrode active material has a NASICON-type structure in the positive electrode layer means that the positive electrode active material (in particular, particles thereof) exhibits, at a predetermined incident angle, one or more main peaks corresponding to a Miller index that is unique to a so-called NASICON-type crystal structure in X-ray diffraction. Examples of the preferably used positive electrode active material that has a NASICON-type structure include the compounds exemplified above.

The fact that the positive electrode active material has an olivine-type structure in the positive electrode layer means that the positive electrode active material (in particular, particles thereof has an olivine-type crystal structure, and in a broad sense, refers to the fact that the negative electrode active material has a crystal structure that can be identified as an olivine-type crystal structure by those skilled in the field of solid-state batteries. In a narrow sense, the fact that the positive electrode active material has an olivine-type structure in the positive electrode layer means that the positive electrode active material (in particular, particles thereof) exhibits, at a predetermined incident angle, one or more main peaks corresponding to a Miller index that is unique to a so-called olivine-type crystal structure in X-ray diffraction. Examples of the preferably used positive electrode active material that has an olivine-type structure include the compounds exemplified above.

The fact that the positive electrode active material has a spinel-type structure in the positive electrode layer means that the positive electrode active material (in particular, particles thereof has a spinel-type crystal structure, and in a broad sense, refers to the fact that the negative electrode active material has a crystal structure that can be identified as a spinel-type crystal structure by those skilled in the field of solid-state batteries. In a narrow sense, the fact that the positive electrode active material has a spinel-type structure in the positive electrode layer means that the positive electrode active material (in particular, particles thereof) exhibits, at a predetermined incident angle, one or more main peaks corresponding to a Miller index that is unique to a so-called spinel-type crystal structure in X-ray diffraction. Examples of the preferably used positive electrode active material that has a spinel-type structure include the compounds exemplified above.

The chemical composition of the positive electrode active material may be an average chemical composition. The average chemical composition of the positive electrode active material means the average value for the chemical composition of the positive electrode active material in the thickness direction of the positive electrode layer. The average chemical composition of the positive electrode active material can be analyzed and measured by breaking the solid-state battery and performing a composition analysis in accordance with EDX with the use of SEM-EDX (energy dispersive X-ray spectroscopy) in a field of view in which the positive electrode layer is all included in the thickness direction.

The positive electrode active material can be obtained in the same manner as the negative electrode active material except that a raw material compound containing a predetermined metal atom is used, or is also available as a commercially available product.

The chemical composition and crystal structure of the positive electrode active material in the positive electrode layer are typically changed by element diffusion at the time of sintering. The positive electrode active material preferably has the chemical composition and crystal structure mentioned above in the solid-state battery subjected to sintering together with the negative electrode layer and the solid electrolyte layer.

The average particle size of the positive electrode active material is not particularly limited, may be, for example, 0.01 um or more and 10 um or less, and is preferably 0.05 um or more and 4 um or less.

The average particle size of the positive electrode active material can be determined in the same manner as the average particle size of the negative electrode active material in the negative electrode layer.

For the average particle size of the positive electrode active material in the positive electrode layer, typically, the average particle size of the positive electrode active material used at the time of manufacture is reflected as it is. In particular, when an $LiCoO_2$ is used for the positive electrode particle, the average particle size is reflected as it is.

The particle shape of the positive electrode active material in the positive electrode layer is not particularly limited, and may be, for example, any of a spherical shape, a flattened shape, and an indefinite shape.

The volume percentage of the positive electrode active material in the positive electrode layer is not particularly limited, and is preferably 30% or more and 90% or less, more preferably 40% or more and 70% or less, from the viewpoint of further improving the utilization factor of the negative electrode active material.

The positive electrode layer may further include, for example, a solid electrolyte, a sintering aid, an conductive additive, in addition to the positive electrode active material.

The type of solid electrolyte included in the positive electrode layer is not particularly limited. Examples of the solid electrolyte included in the positive electrode layer include solid electrolytes that have a garnet-type structure: $(Li_{6.4}Ga_{0.2})$ $La_3Zr_2O_{12}$, $Li_{6.4}La_3(Zr_{1.6}Ta_{0.4})O_{12}$, $(Li_{6.4}Al_{0.2})La_3Zr_2O_{12}$, and $Li_{6.5}La_3(Zr_{1.5}Mo_{0.25})O_{12}$, a solid electrolyte $Li_{3+x}(V_{1-x}Si_x)O_4$ that has a LISICON-type structure, a solid electrolyte $La_{2/3-x}Li_{3x}TiO_3$ that has a perovskite-type structure, and a solid electrolyte $Li_3BO_3$-$Li_4SiO_4$ that has an amorphous structure. Among these examples, from the viewpoint of reactivity at the time of co-sintering with the LISICON-type solid electrolyte for use in the present invention, it is particularly preferable to use a solid electrolyte that has a garnet-type structure or a solid electrolyte that has a LISICON-type structure.

The solid electrolyte of the positive electrode layer can be obtained in the same manner as the negative electrode active material except that a raw material compound containing a predetermined metal atom is used, or is also available as a commercially available product.

The average chemical composition and crystal structure of the solid electrolyte in the positive electrode layer are typically changed by element diffusion at the time of sintering. The positive electrolyte preferably has the average chemical composition and crystal structure mentioned above in the solid-state battery subjected to sintering together with the negative electrode layer and the solid electrolyte layer.

The volume percentage of the solid electrolyte in the positive electrode layer is not particularly limited, and is preferably 20% or more and 60% or less, more preferably 30% or more and 45% or less, from the viewpoint of the balance between further improved utilization factor of the negative electrode active material and the increased energy density of the solid-state battery.

As the sintering aid in the positive electrode layer, the same compound as the sintering aid in the negative electrode layer can be used.

The volume percentage of the sintering aid in the positive electrode layer is not particularly limited, and is preferably 0.1% or more and 20% or less, more preferably 1% or more and 10% or less, from the viewpoint of the balance between further improved utilization factor of the negative electrode active material and the increased energy density of the solid-state battery.

As the conductive additive in the positive electrode layer, any conductive additive known in the field of solid-state batteries can be used. Examples of such an conductive additive include metal materials such as Ag (silver), Au (gold), Pd (palladium), Pt (platinum), Cu (copper), Sn (tin), and Ni (nickel); and carbon materials such as acetylene black, Ketjen black, and carbon nanotubes such as Super P (registered trademark) and VGCF (registered trademark). As the conductive additive of the positive electrode layer, the conductive additive in an elongated shape in section view in the negative electrode layer may be used.

The volume percentage of the conductive additive in the positive electrode layer is not particularly limited, and is preferably 10% or more and 50% or less, more preferably 20% or more and 40% or less, from the viewpoint of the balance between further improved utilization factor of the negative electrode active material and the increased energy density of the solid-state battery.

In the positive electrode layer, the porosity is not particularly limited, and is preferably 20% or less, more preferably 15% or less, still more preferably 10% or less from the viewpoint of further improving the utilization factor of the negative electrode active material.

For the porosity of the positive electrode layer, a value measured in the same manner as for the porosity of the negative electrode layer is used.

The positive electrode layer 1 may have a main-surface current-collecting structure as shown in FIGS. 1A and 1B, or may have an end-surface current-collecting structure. The positive electrode layer preferably has a main-surface current-collecting structure from the viewpoint of reducing the manufacturing cost.

The fact that the positive electrode layer 1 has a main-surface current-collecting structure means that the positive electrode layer 1 has a structure for current collection on the main surface of the negative electrode layer. Particularly, as shown in FIGS. 1A and 1B, the positive electrode layer 1 is electrically connected to the positive electrode terminal 10 via the positive electrode current-collecting layer 11, in contact with the positive electrode current-collecting layer 11 at the main surface 1x of the positive electrode layer 1. In the main-surface current-collecting structure of the positive electrode layer 1, the positive electrode current-collecting layer 11 may be laminated on the main surface of the positive electrode layer 1, and/or the positive electrode layer 1 may be laminated on the main surface of the positive electrode current-collecting layer 11. The main surface refers to a surface that has a relatively large area, particularly, an upper surface and/or a lower surface perpendicular to the laminating direction. The current collection on the main surface means that electrons are emitted to and injected mainly from the main surface. In FIG. 1A, the positive electrode layer 1 is, at the positive electrode terminal 10, directly electrically connected to the positive electrode terminal 10, but may be electrically connected to the positive electrode terminal 10 via the positive electrode current collector, as with the positive electrode layer that has the end-surface current-collecting structure described later. When the positive electrode layer 1 has a main-surface current-collecting structure, the positive electrode layer 1 may be, as shown in FIGS. 1A and 1B, laminated on both main surfaces of the positive electrode current-collecting layer 11, or may be laminated on one of the main surfaces.

The fact that the positive electrode layer 1 has an end-surface current-collecting structure means that the positive electrode layer 1 has, at the positive electrode terminal 10, a structure for current collection on the end surface (in particular, only the end surface) of the positive electrode layer 1. Particularly, the positive electrode layer 1 may be electrically connected to the positive electrode terminal 10 via the positive electrode current collector, in contact with the positive electrode current collector at the end surface (in particular, only the end surface) of the positive electrode layer 1 at the positive electrode terminal 10, or may be directly and electrically connected to the positive electrode terminal 10 at the end surface (in particular, only the end surface) of the positive electrode layer 1 at the positive electrode terminal 10.

The positive electrode current-collecting layer 11 and the positive electrode current collector, which can be provided for the positive electrode layer 1, include at least a conductive material. The positive electrode current-collecting layer 11 and the positive electrode current collector may further contain a solid electrolyte. In a preferred aspect, the positive electrode current-collecting layer 11 and the positive electrode current collector are composed of a sintered body including at least a conductive material and a solid electrolyte. As the conductive material, which may be included in the positive electrode current-collecting layer 11 and the positive electrode current collector, a material with a relatively high conductivity is typically used, and for example, the conductive material may be selected from the same conductive materials as the negative electrode current-collecting layer and the negative electrode current collector. The solid electrolyte, which may be included in the positive electrode current-collecting layer 11 and the positive electrode current collector, may be selected from the same solid electrolytes as the solid electrolytes, which may be included in the negative electrode layer mentioned above.

The positive electrode current-collecting layer 11 and the positive electrode current collector preferably have the form of a sintered body from the viewpoints of reducing the manufacturing cost of the solid-state battery by integral sintering and reducing the internal resistance of the solid-state battery. When the positive electrode current-collecting layer 11 and the positive electrode current collector have the form of a sintered body, for example, the positive electrode current-collecting layer 11 and the negative electrode current collector may be composed of a sintered body further containing a sintering aid in addition to the conductive material and solid electrolyte mentioned above. The sintering aid included in the positive electrode current-collecting layer 11 and the positive electrode current collector may be selected from, for example, the same materials as the sintering aids, which can be included in the negative electrode layer.

The thickness of the positive electrode current-collecting layer is not particularly limited, and may be, for example, 1 um or more and 5 um or less, particularly 1 um or more and 3 um or less.

The thickness of the positive electrode current collector may typically have the same thickness as the positive electrode layer.

The positive electrode layer is a layer, which can be referred to as a "positive electrode active material layer".

The positive electrode layer is preferably a layer capable of occluding and releasing lithium ions as mentioned above, but the present invention is not considered keeping the positive electrode layer from serving as a layer capable of occluding and releasing sodium ions.

(Solid Electrolyte Layer)

In the present invention, the solid electrolyte layer 3 is not particularly limited. From the viewpoint of further improving the utilization factor of the negative electrode active material, the solid electrolyte layer 3 preferably includes a solid electrolyte (hereinafter, sometimes referred to as a "first solid electrolyte") that has a LISICON-type structure and contains at least V. The solid electrolyte layer preferably has the form of a sintered body including the first solid electrolyte.

In the solid electrolyte layer, the LISICON-type structure of the first solid electrolyte encompasses a $\beta_I$ structure, a $\beta_{II}$-type structure, a $\beta_{II}$'-type structure, a $T_I$-type structure, a $T_{II}$-type structure, a $\gamma_{II}$-type structure, and a $\gamma_0$-type structure. More specifically, the solid electrolyte layer may include one or more solid electrolytes that have a $\beta_I$ structure, a $\beta_{II}$-type structure, a $\beta_{II}$'-type structure, a $T_I$-type structure, a $T_{II}$-type structure, a $\gamma_{II}$-type structure, a $\gamma_0$-type structure, or a composite structure thereof. The LISICON-type structure of the first solid electrolyte is preferably a $\gamma_{II}$-type structure from the viewpoint of further improving the utilization factor of the negative electrode active material.

The fact that the first solid electrolyte has a $\gamma_{II}$-type structure in the solid electrolyte layer means that the solid electrolyte has a $\gamma_{II}$-type crystal structure, and in a broad sense, refers to the fact that the negative electrode active material has a crystal structure that can be identified as a $\gamma_{II}$-type crystal structure by those skilled in the field of solid-state batteries. In a narrow sense, the fact that the first solid electrolyte has a $\gamma_{II}$-type structure in the solid electrolyte layer means that the solid electrolyte exhibits, at a predetermined incident angle, one or more main peaks corresponding to a Miller index that is unique to a so-called $\gamma_{II}$-$Li_3VO_4$-type crystal structure in X-ray diffraction. The compound that has a $\gamma_{II}$- type structure (that is, solid electrolyte) is described, for example, in the document "J. solid state chem" (A. R. West et. al, J. solid state chem., 4, 20 -28 (1972)), and example thereof include ICDD Card No. 01-073-2850.

The fact that the first solid electrolyte has a $\beta_I$-type structure in the solid electrolyte layer means that the solid electrolyte has a $\beta_I$-type crystal structure, and in a broad sense, refers to the fact that the negative electrode active material has a crystal structure that can be identified as a $\beta_I$-type crystal structure by those skilled in the field of solid-state batteries. In a narrow sense, the fact that the first solid electrolyte has a $\beta_I$-type structure in the solid electrolyte layer means that the solid electrolyte exhibits, at a predetermined incident angle, one or more main peaks corresponding to a Miller index that is unique to a so-called $\beta_I$-$Li_3VO_4$-type crystal structure in X-ray diffraction. The compound that has a $\beta_I$-type structure (that is, solid electrolyte) is described, for example, in the document "J. solid state chem" (A. R. West et. al, J. solid state chem., 4, 20-28 (1972)), and as an example thereof, the following table shows, for example, the XRD data (the d-value of plane spacing and the corresponding Miller indices) listed therein.

[Table 1]

| $d$(Å) | $I$ | $h\ k\ l$ |
|---|---|---|
| | $Li_2CoSiO_4$ $\beta_{I}$, 25°C | |
| 5.4 | 80 | 1 1 0 |
| 4.08 | 60 | 1 2 0 |
| 3.88 | 60 | 1 0 1 |
| 3.65 | 100 | 1 1 1, 0 2 1 |
| 3.14 | 20 | 2 0 0, 1 2 1 |
| 3.10 | 40 | 1 3 0 |
| 2.71 | 80 | 2 2 0 |
| 2.68 | 60 | 0 4 0 |
| 2.47 | 80 | 0 0 2 |
| 2.38 | 60 | 2 2 1 |
| 2.36 | 20 | 0 4 1 |

The fact that the first solid electrolyte has a $\beta_{II}$-type structure in the solid electrolyte layer means that the solid electrolyte has a $\beta_{II}$-type crystal structure, and in a broad sense, refers to the fact that the negative electrode active material has a crystal structure that can be identified as a $\beta_{II}$-type crystal structure by those skilled in the field of solid-state batteries. In a narrow sense, the fact that the first solid electrolyte has a $\beta_{II}$-type structure in the solid electrolyte layer means that the solid electrolyte exhibits, at a predetermined incident angle, one or more main peaks corresponding to a Miller index that is unique to a so-called $\beta_{II}$-$Li_3VO_4$-type crystal structure in X-ray diffraction. The compound that has a $\beta_{II}$-type structure (that is, solid electrolyte) is described, for example, in the document "J. solid state chem" (A. R. West et. al, J. solid state chem., 4, 20-28 (1972)), and examples thereof include ICDD Card No. 00-024-0675.

The fact that the first solid electrolyte has a $\beta_{II}$'-type structure in the solid electrolyte layer means that the solid electrolyte has a $\beta_{II}$'-type crystal structure, and in a broad sense, refers to the fact that the negative electrode active material has a crystal structure that can be identified as a $\beta_{II}$'-type crystal structure by those skilled in the field of solid-state batteries. In a narrow sense, the fact that the first solid electrolyte has a $\beta_{II}$'-type structure in the solid electrolyte layer means that the solid electrolyte exhibits, at a predetermined incident angle, one or more main peaks corresponding to a Miller index that is unique to a so-called $\beta_{II}$'-$Li_3VO_4$-type crystal structure in X-ray diffraction. The compound that has a $\beta_{II}$'-type structure (that is, solid electrolyte) is described, for example, in the document "J. solid state chem" (A. R. West et. al, J. solid state chem., 4, 20-28 (1972)), and as an example thereof, the following table shows, for example, the XRD data (the d-value of plane spacing and the corresponding Miller indices) listed therein.

[Table 2]

| | $Li_3CoGeO_4$<br>$\beta_{II}$', 25°C | |
|---|---|---|
| d(A) | I | h k l |
| | | 0 1 0 |
| 4.17 | 80 | 1 1 0 |
| 3.96 | 80 | 1 0 1 |
| 3.70 | 10 | 0 1 1 |
| 3.20 | 20 | 2 0 0, 1 1 1 |
| 2.75 | 100 | 2 1 0 |
| 2.74 | 60 | 0 2 0 |
| 2.50 | 80 | 0 0 2 |
| | | 1 2 0 |

The fact that the first solid electrolyte has a $T_I$-type structure in the solid electrolyte layer means that the solid electrolyte has a $T_I$-type crystal structure, and in a broad sense, refers to the fact that the negative electrode active material has a crystal structure that can be identified as a $T_I$-type crystal structure by those skilled in the field of solid-state batteries. In a narrow sense, the fact that the first solid electrolyte has a $T_I$-type structure in the solid electrolyte layer means that the solid electrolyte exhibits, at a predetermined incident angle, one or more main peaks corresponding to a Miller index that is unique to a so-called $T_I$-$Li_3VO_4$-type crystal structure in X-ray diffraction. The compound that has a $T_I$-type structure (that is, solid electrolyte) is described, for example, in the document "J. solid state chem" (A. R. West et. al, J. solid state chem., 4, 20-28 (1972)), and examples thereof include ICDD Card No. 00-024-0668.

The fact that the first solid electrolyte has a $T_{II}$-type structure in the solid electrolyte layer means that the solid electrolyte has a $T_{II}$-type crystal structure, and in a broad sense, refers to the fact that the negative electrode active material has a crystal structure that can be identified as a $T_{II}$-type crystal structure by those skilled in the field of solid-state batteries. In a narrow sense, the fact that the first solid electrolyte has a $T_{II}$-type structure in the solid electrolyte layer means that the solid electrolyte exhibits, at a predetermined incident angle, one or more main peaks corresponding to a Miller index that is unique to a so-called $T_{II}$-$Li_3VO_4$-type crystal structure in X-ray diffraction. The compound that has a $T_{II}$-type structure (that is, solid electrolyte) is described, for example, in the document "J. solid state chem" (A. R. West et. al, J. solid state chem., 4, 20-28 (1972)), and examples thereof include ICDD Card No. 00-024-0669.

The fact that the first solid electrolyte has a $\gamma_0$-type structure in the solid electrolyte layer means that the solid electrolyte has a $\gamma_0$-type crystal structure, and in a broad sense, refers to the fact that the negative electrode active material has a crystal structure that can be identified as a $\gamma_0$-type crystal structure by those skilled in the field of solid-state batteries. In a narrow sense, the fact that the first solid electrolyte has a $\gamma_0$-type structure in the solid electrolyte layer means that the solid electrolyte exhibits, at a predetermined incident angle, one or more main peaks corresponding to a Miller index that is unique to a so-called $\gamma_0$-$Li_3VO_4$-type crystal structure in X-ray diffraction. The compound that has a $\gamma_0$-type structure (that is, solid electrolyte) is described, for example, in the document "J. solid state chem" (A. R. West et. al, J. solid state chem., 4, 20-28 (1972)), and as an example thereof, the following table shows, for example, the XRD data (the d-value of plane spacing and the corresponding Miller indices) listed therein.

[Table 3]

| | $Li_4CoSiO_4$ $\gamma_0$, 25°C | |
|---|---|---|
| $d$(Å) | $I$ | $hkl$ |
| 5.4 | 60 | 110, 020 |
| 4.08 | 80 | 120 |
| 3.92 | 60 | 101 |
| 3.69 | 20 | 111, 021 |
| 3.67 | 100 | |
| 3.16 | 20 | 121 |
| 3.10 | 60 | 200, 130, 210 |
| 2.90 | 20 | 031 |
| 2.71 | 100 | 220 |
| 2.68 | 60 | 040 |
| 2.65 | 20 | 131 |
| 2.64 | 20 | |
| 2.59 | 20 | 211 |
| 2.57 | 20 | |
| $2.51_3$ | 100 | 002 |

In the solid electrolyte layer, the first solid electrolyte more preferably has an average chemical composition represented by General Formula (3): [Chemical Formula 3]

$$(Li_{[3-ax+(5-b)(1-y)]}A_x)\ (V_yB_{1-y})O_4 \qquad (3)$$

In the formula (3), A represents one or more elements selected from the group consisting of Na (sodium), K (potassium), Mg (magnesium), Ca (calcium), and Zn (zinc).

B represents one or more elements selected from the group consisting of Zn (zinc), Al (aluminum), Ga (gallium), Si (silicon), Ge (germanium), Sn (tin), P (phosphorus), As (arsenic), Ti (titanium), Mo (molybdenum), W (tungsten), Fe (iron), Cr (chromium), and Co (cobalt).

x has a relationship of $0 \leq x \leq 1.0$, particularly $0 \leq x \leq 0.2$.

y has a relationship of $0 < y < 1.0$, particularly $0.05 \leq y < 0.93$, and from the viewpoint of further improving the utilization factor of the negative electrode active material, y preferably has a relationship of $0.4 \leq y \leq 0.9$, more preferably $0.6 \leq y \leq 0.9$.

a is the average valence of A, and is the same as the average valence of A in the formula (1).

b is the average valence of B, and is the same as the average valence of B in the formula (1).

In the formula (3), from the viewpoint of further improving the utilization factor of the negative electrode active material, preferred embodiments are presented as follows:

A represents Al.
B represents one or more elements selected from the group consisting of Si, Ge, and P.

x has a relationship of $0 \leq x \leq 0.2$, particularly $0 \leq x \leq 0.1$, and is preferably 0.
y has a relationship of $0.7 \leq y \leq 0.9$, and is preferably 0.8.

The average chemical composition of the first solid electrolyte in the solid electrolyte layer means the average value for the chemical composition of the first solid electrolyte in the thickness direction of the solid electrolyte layer. The average chemical composition of the first solid electrolyte can be analyzed and measured by breaking the solid-state battery and performing a composition analysis in accordance with EDX with the use of SEM-EDX (energy dispersive X-ray spectroscopy) in a field of view in which the solid electrolyte layer is all included in the thickness direction.
In the solid electrolyte layer, the average chemical composition of the first solid electrolyte that has a LISICON-type structure and the average chemical composition of a solid electrolyte that has a garnet-type structure as described later can be automatically distinguished and then measured depending on the compositions thereof in the composition analysis mentioned above. For example, from an SEM-EDX analysis, the site of the first solid electrolyte (that is, the solid electrolyte that has the LISICON-type structure) can be separated by identification with detection of V, and the site of a second solid electrolyte (for example, a garnet-type solid electrolyte) can be separated by identification with La and Zr.
The first solid electrolyte of the solid electrolyte layer can be obtained in the same manner as the negative electrode active material except that a raw material compound containing a predetermined metal atom is used, or is also available as a commercially available product.
The chemical composition and crystal structure of the first solid electrolyte in the solid electrolyte layer are typically changed by element diffusion at the time of sintering. The first solid electrolyte preferably has the chemical composition and crystal structure mentioned above in the solid-state battery subjected to sintering together with the negative electrode layer and the positive electrode layer. In particular, as for the chemical composition of the first solid electrolyte, for example, in the case of high-speed sintering at 750°C for about 1 minute together with the negative electrode layer, the chemical composition of the solid electrolyte used at the time of manufacture is reflected as it is, but in the case of sintering at 750°C for a long period of time on the order of 1 hour, the element diffusion from the negative electrode active material of the negative electrode layer proceeds, thereby typically increasing the V amount.
The volume percentage of the first solid electrolyte in the solid electrolyte layer is not particularly limited, and is preferably 10% or more and 80% or less, more preferably 20% or more and 60% or less, still more preferably 30% or more and 60% or less, from the viewpoint of further improving the utilization factor of the negative electrode active material.
The volume percentage of the first solid electrolyte in the solid electrolyte layer can be measured in the same manner as the volume percentage of the positive electrode active material.
The solid electrolyte layer preferably further includes a solid electrolyte (hereinafter, sometimes simply referred to as a "second solid electrolyte") that has a garnet-type structure. The solid electrolyte layer includes the second solid electrolyte, thereby allowing the insulating property of the solid electrolyte layer to be improved as mentioned above. This is believed to be because the second solid electrolyte is less likely to be reduced during charging and discharging, thus making electrons less likely to be injected, and because the bent degree of the first solid electrolyte in the solid electrolyte is increased, thereby increasing the electronic resistance.
The second solid electrolyte is the same as the solid electrolyte that has a garnet-type structure, which is preferably included in the negative electrode layer, and may be selected from the same range as that of the solid electrolyte that has a garnet-type structure, listed in the description of the negative electrode layer. When the solid electrolyte layer and the negative electrode layer both include a solid electrolyte that has a garnet-type structure, the solid electrolyte that has a garnet-type structure, included in the solid electrolyte layer, and the solid electrolyte that has a garnet-type structure, included in the negative electrode layer, may have the same chemical composition or different chemical compositions from each other.
A preferred solid electrolyte as a solid electrolyte layer B is a solid electrolyte that has the following chemical composition in the formula (2):

A represents one or more (in particular, two) elements selected from the group consisting of Ga and Al.
B represents one or more elements selected from the group consisting of Nb, Ta, W, Mo, and Bi.
x has a relationship of $0 \leq x \leq 0.3$, and is preferably 0.2.
y has a relationship of $0 \leq y \leq 1.0$, preferably a relationship of $0 \leq y \leq 0.7$, more preferably a relationship of $0 \leq y \leq 0.3$, and is still more preferably 0.
a is the average valence of A.
b is the average valence of B.

The average chemical composition of the second solid electrolyte in the solid electrolyte layer means the average value for the chemical composition of the second solid electrolyte in the thickness direction of the solid electrolyte layer. The average chemical composition of the second solid electrolyte can be analyzed and measured by breaking the solid-state battery and performing a composition analysis in accordance with EDX with the use of SEM-EDX (energy dispersive X-ray spectroscopy) in a field of view in which the solid electrolyte layer is all included in the thickness direction.

The volume percentage of the second solid electrolyte in the solid electrolyte layer is not particularly limited, and is preferably 10% or more and 80% or less, more preferably 20% or more and 70% or less, still more preferably 40% or more and 60% or less, from the viewpoint of further improving the utilization factor of the negative electrode active material.

The volume percentage of the second solid electrolyte in the solid electrolyte layer can be measured in the same manner as the volume percentage of the positive electrode active material.

The solid electrolyte layer may further contain, for example, a sintering aid and the like in addition to the solid electrolytes. From the viewpoint of further improving the utilization factor of the negative electrode active material, at least one of the negative electrode layer and the solid electrolyte layer, preferably the both further contain a sintering aid. The fact that at least one of the negative electrode layer and the solid electrolyte layer further contains a sintering aid means that one of the negative electrode layer or the solid electrolyte layer may further contain a sintering aid, or the both may further contain a sintering aid.

As the sintering aid in the solid electrolyte layer, the same compound as the sintering aid in the negative electrode layer can be used.

The volume percentage of the sintering aid in the solid electrolyte layer is not particularly limited, and is preferably 0.1% or more and 20% or less, more preferably 1% or more and 10% or less, from the viewpoint of the balance between further improved utilization factor of the negative electrode active material and the increased energy density of the solid-state battery.

The thickness of the solid electrolyte layer is typically 0.1 um or more and 200 um or less, preferably 0.1 to 30 um, from the viewpoint of reducing the thickness of the solid electrolyte layer, more preferably 20 to 1 um.

For the thickness of the solid electrolyte layer, the average value of thicknesses measured at arbitrary ten points in an SEM image is used.

In the solid electrolyte layer, the porosity is not particularly limited, and is preferably 20% or less, more preferably 15% or less, still more preferably 10% or less from the viewpoint of further improving the utilization factor of the negative electrode active material.

For the porosity of the solid electrolyte layer, a value measured in the same manner as for the porosity of the negative electrode layer is used.

The chemical composition of the solid electrolyte layer is not necessarily homogeneous in the solid electrolyte layer, and the chemical composition may vary, for example, in the thickness direction. In particular, the average composition of the first solid electrolyte of the solid electrolyte layer satisfies the foregoing, thereby allowing the insulating property of the solid electrolyte layer to be improved as mentioned above.

The solid electrolyte layer is preferably a layer capable of conducting lithium ions as mentioned above, but the present invention is not considered keeping the solid electrolyte layer from serving as a layer capable of conducting ions.

(Protective Layer)

The protective layer 5 is, as shown on paper in FIG. 1A, formed at least on the upper and lower surfaces of the solid-state battery, and preferably also formed on all the side surfaces of the solid-state battery. The protective layer 5 is intended for electrically, physically, and chemically protecting the solid-state battery (in particular, battery elements such as a positive electrode layer, a negative electrode layer, and a solid electrolyte layer).

The protective layer 5 is typically made of an insulating substance. The insulating substance means a substance that has neither ion conductivity nor electron conductivity. Accordingly, the insulating substance is an inorganic substance that has neither ion conductivity nor electron conductivity. The inorganic substance that has no ion conductivity means an inorganic substance that has an ion conductivity of $1 \times 10^{-7}$ S/cm or less. From the viewpoint of keeping the battery for a longer period of time from being deteriorated, the ion conductivity is preferably $1 \times 10^{-10}$ S/cm or less. The inorganic substance that has no electron conductivity means an inorganic substance that has an electron conductivity of $1 \times 10^{-7}$ S/cm or less. From the viewpoint of keeping the battery for a longer period of time from being deteriorated, the electron conductivity is preferably $1 \times 10^{-10}$ S/cm or less.

When the protective layer 5 is made of such an insulating substance, the protective layer 5 has excellent moisture resistance, environmental resistance, and durability. Particularly, the protective layer 5 can serve as a protective layer that has higher joint strength for the battery elements, as compared with a protective layer including a resin (for example, a polymer compound). As a result, the protective layer 5 can, as compared with the protective layer including a polymer compound, more sufficiently prevent the solid-state battery from being expanded and shrunk, and as a result, can more sufficiently keeping the battery performance from being degraded.

The insulating substance constituting the protective layer 5 is not particularly limited, and examples thereof include glass and ceramics. Examples of the glass include quartz glass ($SiO_2$), and composite oxide-based glass obtained

by combining $SiO_2$ and at least one selected from PbO, $B_2O_3$, MgO, ZnO, $Bi_2O_3$, $Na_2O$, and $Al_2O_3$. Examples of the ceramics include alumina, cordierite, mullite, steatite, and forsterite. The protective layer may be made of one or more materials selected from the group consisting of these substances. The protective layer may contain a material with electron conductivity (for example, a metal) as long as the battery elements are not short-circuited. When the protective layer contains a material with electron conductivity, the content percentage of the electron-conductive material may be, for example, 1% by volume or less. The protective layer contains an electron-conductive material (for example, a metal), thereby allowing the heat generated by a battery reaction to be smoothly released to the outside.

The protective layer is composed of a sintered body including the insulating substance particles mentioned above. The sintered body constituting the protective layer has pores between the insulating substance particles, but has denseness to such an extent that moisture and gas (carbon dioxide) can be kept from being adsorbed, absorbed, and permeated in the thickness direction (for example, the laminating direction L).

The protective layer may contain a resin such as a polymer compound, and may have, for example, a polymer compound for use at the time of manufacture and/or a thermal decomposition product thereof remaining as residues. The content of residues such as a polymer compound and a thermal decomposition product thereof in the protective layer is typically 0.1% by weight or less, particularly 0.01% by weight or less with respect to the total amount of the protective layer. Further, in the positive electrode layer, the positive electrode current-collecting layer, the positive electrode current collector, the negative electrode layer, the negative electrode current-collecting layer, the negative electrode current collector, the solid electrolyte layer, and the electrode separation parts described later, residues may remain as in the protective layer. For example, the content of the residues in each layer or part of the positive electrode layer, the positive electrode current-collecting layer, the positive electrode current collector, the negative electrode layer, the negative electrode current-collecting layer, the negative electrode current collector, the solid electrolyte layer, and the electrode separation parts may, as a value with respect to the total amount of each layer, fall within the same range as the content range of the residues in the protective layer.

The porosity of the protective layer may be, for example, 0.1% by volume or more and 20% by volume or less, particularly 1% by volume or more and 10% by volume or less. For the porosity, the value measured by a gravimetric porosity method, a computed tomography method with CT scan used, an immersion method, or the like is used.

The oxygen permeability of the protective layer in the thickness direction may be, for example, $10^{-1}$ cc/m$^2$/day/atmospheric pressure or less, particularly $10^{-3}$ cc/m$^2$/day/atmospheric pressure or less.

The $H_2O$ permeability of the protective layer in the thickness direction may be, for example, $10^{-2}$ g/m$^2$/day or less, particularly $10^{-4}$ g/m$^2$/day or less. For the $H_2O$ permeability, the value measured at 25°C by a carrier gas method, a compression method, or a Ca corrosion method is used.

The protective layer may further contain, for example, a sintering aid and the like in addition to the insulating substance. The protective layer preferably further contains a sintering aid. As the sintering aid in the protective layer, the same compound as the sintering aid in the negative electrode layer can be used.

For the protective layer, the thickness of the thickest part is preferably 500 um or less, more preferably 100 um or less, still more preferably 50 um or less, most preferably 20 um or less from the viewpoint of further keeping the battery performance from being degraded. The protective layer has an average thickness of preferably 1 um or more, more preferably 5 um or more, from the viewpoint of further keeping the battery performance from being degraded due to adsorption, absorption, permeation, and the like of moisture and gas (carbon dioxide).

For the thickness and average thickness of the thickest part of the protective layer, the maximum thickness and the average thickness for the thicknesses at arbitrary hundred points are used respectively.

The protective layer covers the upper and lower surfaces of the solid-state battery. The protective layer may have direct contact with the upper and lower surfaces of the battery elements covered with the protective layer as shown in FIGS. 1A and 1B, or may have indirect contact with the upper and lower surfaces of the battery elements, with layers other than the layers constituting the battery elements interposed between the protective layer and the upper and lower surfaces. The fact that the protective layer has direct contact with the upper and lower surfaces of the battery elements means that the surface of the protective layer and the surface of the battery elements have direct contact with each other, without layers other than the layers constituting the battery elements interposed between the protective layer and the battery elements.

The protective layer and the upper and lower surfaces of the battery elements covered with the protective layer preferably have sintered bodies sintered integrally with each other. The fact that the protective layer and the upper and lower surfaces of the battery elements covered with the protective layer preferably have sintered bodies sintered integrally with each other means that the protective layer is joined by sintering to the upper and lower surfaces of the battery elements covered with the protective layer. Particularly, the protective layer and the upper and lower surfaces of the battery elements covered with the protective layer are both sintered bodies, and at the same time, are sintered integrally. For example, the protective layer and the battery elements preferably have an integrally sintered configuration. It is to be noted that the protective layer and the upper and lower surfaces of the battery elements covered with the protective layer do not have to be strictly all integrated therebetween, and parts thereof may fail to be integrated. The protective layer and the upper and lower surfaces of the battery elements covered with the protective layer have only to be integrated as a whole.

The upper and lower surfaces of the battery elements covered by the protective layer typically refer to the surfaces of the outermost layers of the battery elements. The outermost layers of the battery elements refer to, among the layers constituting the battery elements, the uppermost layer disposed at the uppermost position and the lowermost layer disposed at the lowermost position. The surfaces of the outermost layers refer to the upper surface of the uppermost layer and the lower surface of the lowermost layer.

(Electrode Separation Part)

The solid-state battery according to the present invention typically further includes the electrode separation pars (also referred to as "margin layers" or "margin parts") 15 and 25.

The electrode separation part 15 (that is, the positive electrode separation part) is disposed around the positive electrode layer 1 to separate the positive electrode layer 1 from the negative electrode terminal 20. The electrode separation part 25 (that is, the negative electrode separation part) is disposed around the negative electrode layer 2 to separate the negative electrode layer 2 from the positive electrode terminal 10.

The electrode separation units 15 and 25 are preferably made of one or more materials selected from the group consisting of, for example, a solid electrolyte, an insulating substance, and a mixture thereof.

For the solid electrolyte that can constitute the electrode separation parts 15 and 25, the same material as the solid electrolyte that can constitute the solid electrolyte layer can be used.

For the insulating substance that can constitute the electrode separation parts 15 and 25, the same material as the insulating substance that can constitute the protective layer can be used.

The electrode separation parts preferably further contain a sintering aid. As the sintering aid in the electrode separation parts, the same compound as the sintering aid in the negative electrode layer can be used.

(Electrode Terminal)

The solid-state battery according to the present invention has, on each of two facing side surfaces, the electrode terminals 10 and 20 electrically connected to the positive electrode layer or the negative electrode layer. The electrode terminal electrically connected to the positive electrode layer is referred to as a positive electrode terminal, and the electrode terminal electrically connected to the negative electrode layer is referred to as a negative electrode terminal 20. In addition, the electrode terminal is a member also referred to as an end-surface electrode. The solid-state battery according to the present invention has the electrode terminals 10 and 20 parallel to each other and also parallel to the laminating direction L. The electrode terminals preferably include a conductive material with a high conductivity. The specific material of the conductive material for constituting the electrode terminals is not particularly limited, but examples thereof include at least one conductive metal (that is, a metal or an alloy) selected from the group consisting of gold, silver, copper, platinum, tin, palladium, aluminum, titanium, nickel, oxygen-free copper, a Cu-Sn alloy, a Cu-Zr alloy, a Cu-Fe alloy, a Cu-Cr-Sn-Zn alloy, a 42 alloy (Ni-Fe alloy), and a Kovar alloy) from the viewpoint of conductivity.

The thicknesses of the electrode terminals 10 and 20 are not particularly limited, and may be, for example, 1 um or more and 1 mm or less, particularly 10 um or more and 100 um or less.

[Method for Manufacturing Solid-state Battery]

The solid-state battery can be manufactured, for example, by a so-called green sheet method, a printing method, or a combined method thereof.

The green sheet method will be described.

First, a paste is prepared by appropriately mixing a positive electrode active material with a solvent, a resin, and the like. The paste is applied onto a sheet, and dried to form a green sheet for constituting the positive electrode layer. The green sheet for the positive electrode layer may contain a solid electrolyte, an conductive additive, and/or a sintering aid.

A paste is prepared by appropriately mixing a negative electrode active material with an conductive additive, a solvent, a resin, and the like. The paste is applied onto a sheet, and dried to form a green sheet for constituting the negative electrode layer. The green sheet for the negative electrode layer may contain a solid electrolyte and/or a sintering aid.

A paste is prepared by appropriately mixing a solid electrolyte with a solvent, a resin, and the like. The paste is applied and dried to prepare a green sheet for constituting the solid electrolyte layer. The green sheet for the solid electrolyte layer may contain sintering aid and the like.

A paste is prepared by appropriately mixing an insulating substance with a solvent, a resin, and the like. The paste is applied and dried to prepare a green sheet for constituting the protective layer. The green sheet for the protective layer may contain sintering aid and the like.

A paste is prepared by appropriately mixing a solid electrolyte and/or an insulating substance with a solvent, a resin, and the like. The paste is applied and dried to prepare a green sheet for constituting the electrode separation parts. The green sheet for the electrode separation parts may contain sintering aid and the like.

An electrode terminal paste is prepared by appropriately mixing a conductive material with a solvent, a resin, and the like.

Next, the green sheets obtained in the manner mentioned above are appropriately stacked to prepare a stacked body. The stacked body prepared may be pressed. Preferred pressing methods include an isostatic press method.

Thereafter, the electrode terminal paste is applied to predetermined positions of the stacked body, and subjected to sintering at, for example, 600 to 800°C, thereby allowing a solid-state battery to be obtained.

The printing method will be described.

The printing method is the same as the green sheet method except for the following matters.

- Inks for each layer that have the same compositions as the compositions of the pastes for each layer for obtaining the green sheets are prepared except that the blending amounts of the solvents and resins are adjusted to be suitable for use as the inks.
- The inks for each layer are used for printing and stacking, thereby fabricating a stacked body.

Hereinafter, the present invention will be described in more detail, based on specific examples, but the present invention is not to be considered limited to the following examples in any way, and can be worked with changes appropriately made without changing the scope of the invention.

## EXAMPLES

### [Production of Material]

In accordance with the following (1) to (3), a positive electrode active material, a negative electrode active material, a solid electrolyte, and a sintering aid for use in the production of a positive electrode layer and a negative electrode layer, and first and second solid electrolytes and a sintering aid for use in the production of a solid electrolyte layer were produced so as to have compositions described later.

#### (1) Production of Garnet-type Solid Electrolyte Powder (Solid Electrolyte Powder of Negative Electrode Layer and Second Solid Electrolyte Powder of Solid Electrolyte Layer)

Garnet-type solid electrolyte powders for use in examples and comparative examples were produced as follows.

A lithium hydroxide monohydrate $LiOH \cdot H_2O$, a lanthanum hydroxide $La(OH)_3$, a zirconium oxide $ZrO_2$, a gallium oxide $Ga_2O_3$, an aluminum oxide $Al_2O_3$, a niobium oxide $Nb_2O_5$, a tantalum oxide $Ta_2O_5$, and a molybdenum oxide $MoO_3$ were used for raw materials.

The respective raw materials were weighed such that the chemical composition was a predetermined chemical composition, encapsulated with the addition of water in a 100 ml polyethylene pot made of polyethylene, and rotated at 150 rpm for 16 hours on a pot rack to mix the raw materials. In addition, the lithium hydroxide monohydrate $LiOH \cdot H_2O$ as a Li source was prepared in excess of 3 wt% with respect to the target composition in consideration of Li deficiency at the time of sintering.

The obtained slurry was evaporated and dried, and then subjected to calcination at 900°C for 5 hours to obtain a target phase.

The calcined powder obtained was, with the addition of a mixed solvent of toluene-acetone thereto, subjected to grinding for 6 hours in a planetary ball mill.

The ground powder was dried to obtain a solid electrolyte powder. The powder was checked by ICP measurement for having no compositional deviation.

#### (2) Production of Positive Electrode Active Material Powder, Negative Electrode Active Material Powder, and LISICON-type Solid Electrolyte Powder (First Solid Electrolyte Powder of Solid Electrolyte Layer)

Positive electrode active material powders, negative electrode active material powders, and first solid electrolyte powders for use in examples and comparative Examples were produced as follows.

A lithium hydroxide monohydrate $LiOH \cdot H_2O$, a vanadium pentoxide $V_2O_5$, a silicon oxide $SiO_2$, a germanium oxide $GeO_2$, a phosphorus oxide $P_2O_5$, an aluminum oxide $Al_2O_3$, and a zinc oxide ZnO were used for raw materials.

The respective raw materials were appropriately weighed such that the chemical composition was a predetermined chemical composition, encapsulated with the addition of water in a 100 ml polyethylene pot made of polyethylene, and rotated at 150 rpm for 16 hours on a pot rack to mix the raw materials.
The obtained slurry was evaporated and dried, and then subjected to calcination in air at 800°C for 5 hours.
The calcined powder obtained was, with the addition of alcohol thereto, encapsulated again in a 100 ml polyethylene pot made of polyethylene, and then subjected to grinding by rotation at 150 rpm for 16 hours on a pot rack.
The ground powder was again subjected to firing at 900°C for 5 hours.
Thereafter, the fired powder obtained was, with the addition of a mixed solvent of toluene-acetone thereto, subjected to grinding for 6 hours in a planetary ball mill, and dried to obtain a negative electrode active material powder and a first solid electrolyte powder. The powder was checked by ICP measurement for having no compositional deviation.

(3) Production of Sintering Aid Powder

Sintering aid powders for use in examples and comparative examples were produced as follows.
A lithium hydroxide monohydrate $LiOH \cdot H_2O$, a boron oxide $B_2O_3$, a lithium carbonate $Li_2CO_3$, and an aluminum oxide $Al_2O_3$ were used for raw materials.
The respective raw materials were appropriately weighed such that the chemical composition was a predetermined chemical composition, well mixed in a mortar, and then subjected to calcination at 650°C for 5 hours.
Thereafter, the calcined powder was again well ground and mixed in a mortar, and then subjected to firing at 680°C for 40 hours.
The fired powder obtained was, with the addition of a mixed solvent of toluene-acetone thereto, subjected to grinding for 6 hours in a planetary ball mill, and dried to obtain a sintering aid powder. The powder was checked by ICP measurement for having no compositional deviation.

(4) Flattened Ag Powder

A spherical Ag powder (average primary particle size: 2 um, from SHOEI CHEMICAL INC.) was subjected to bead milling to obtain a flattened Ag powder A with an aspect (a/b) ratio of 4.5 and a b value of 0.9 um.
Spherical Ag powders of 0.2 um to 3 um in average primary particle size were subjected to bead milling for 1 to 20 hours to obtain flattened Ag powders B to H with various aspect ratios and short sides b. The aspect ratio is increased as the processing time of the bead milling is longer, whereas the aspect ratio is decreased as the processing time is shorter. The b value is increased as the average primary particle size of the spherical Ag powder used is larger, whereas the b value is decreased as the average primary particle size is smaller.
The aspect (a/b) ratio of the flattened Ag powder B obtained was 4.4, with b of 0.5 um.
The aspect (a/b) ratio of the flattened Ag powder C obtained was 4.5, with b of 1.5 um.
The aspect (a/b) ratio of the flattened Ag powder D obtained was 4.6, with b of 2.2 um.
The aspect (a/b) ratio of the flattened Ag powder E obtained was 2.3, with b of 0.9 um.
The aspect (a/b) ratio of the flattened Ag powder F obtained was 3.5, with b of 0.9 um.
The aspect (a/b) ratio of the flattened Ag powder G obtained was 7.0, with b of 0.8 um.
The aspect (a/b) ratio of the flattened Ag powder H obtained was 12.1, with b of 0.7 um.

(5) Fibrous Ag Powder

As a fibrous Ag powder A, a commercially available silver nanowire (aspect (a/b) ratio = 17, short-side length b = 0.6 um, from Aldrich) was used.

(6) Flattened Cu Powder

A spherical Cu powder (average primary particle size: 2.8 um, from DOWA Electronics Materials Co., Ltd.) was subjected to bead milling to obtain a flattened Cu powder A with an aspect (a/b) ratio of 4.5 and a b value of 1.2 um.

[Example 1]

(Manufacture of Solid-state Battery)

The solid-state battery (solid-state battery for single electrode evaluation) shown in FIG. 4A was manufactured by the following method. It is to be noted that, because the following description regarding the method for manufacturing the solid-state battery according to the present example will be cited in other examples/comparative examples, the following description also includes methods and information according to the other examples/comparative examples.

• Green Sheet for Negative Electrode Layer

$Li_3VO_4$ ($\beta_{II}$-$Li_3VO_4$ type) as a negative electrode active material, $Li_{6.5}La_3(Zr_{1.5}Ta_{0.5})O_{12}$ (garnet type) as a solid electrolyte powder, the flattened Ag powder A as an conductive additive in an elongated shape in cross section, and $Li_3BO_3$ as a sintering aid were weighed, and kneaded with a butyral resin, an alcohol, and a binder to prepare a negative electrode layer slurry. The volume ratios of the negative electrode active material, solid electrolyte, conductive additive, and sintering aid were adjusted to be (60 - x) : 35 : x : 5 ($10 \leq x \leq 25$) . In Example 1, x was 20.

The negative electrode layer slurry was formed into a sheet on a PET film with the use of a doctor blade method, and dried and peeled to obtain a green sheet for a negative electrode layer.

• Green Sheet for Solid Electrolyte Layer

$Li_{3.2}(V_{0.8}Si_{0.2})O_4$($\gamma_{II}$ type) as a first solid electrolyte, $(Li_{6.4}Ga_{0.05}Al_{0.15})La_3Zr_2O_{12}$ (garnet type) as a second solid electrolyte, and $Li_3BO_3$ as a sintering aid were weighed, and kneaded with a butyral resin, an alcohol, and a binder to prepare a solid electrolyte layer slurry. The volume ratios of the first solid electrolyte, second solid electrolyte, and sintering aid powder were adjusted to be 47.5 : 47.5 : 5.

The solid electrolyte layer slurry was formed into a sheet on a PET film with the use of a doctor blade method, and dried and peeled to obtain a sheet for a solid electrolyte layer.

Next, the green sheet for a negative electrode layer and the green sheet for a solid electrolyte layer were stacked on each other, and subjected to pressure bonding to obtain a laminated body.

The laminated body was cut into a square shape (shape in planar view) with top-view dimensions of 10 mm × 10 mm. Thereafter, as shown in FIG. 4A, an Ag paste coating layer for the negative electrode current-collecting layer 21 was formed on a surface of the green sheet for a negative electrode layer on the side opposite to the green sheet for a solid electrolyte layer. The laminated body obtained was sandwiched between two porous setters, and after removing the binder at 400°C, subjected to sintering at 750°C. For only Examples 20 and 21 and Comparative Example 6, firing was performed under a reducing atmosphere under $N_2/H_2$ for keeping the conductive additive or the active material from being oxidized at the time of firing. For the other examples and comparative examples, firing was performed in an Air atmosphere.

Thereafter, with a Li metal 50 as a counter electrode and a reference electrode attached to a surface of the solid electrolyte layer on the side opposite to the negative electrode layer, the fired body was subjected to a WIP (Warm Isostatic Pressing) treatment under the conditions of 60°C and 200 MPa to manufacture a solid-state battery. Thereafter, the solid-state battery was sealed with a 2032-type coin cell and evaluated.

The thicknesses of the solid electrolyte layer 3, negative electrode layer 2, and negative electrode current-collecting layer 21 were checked with the use of a scanning electron microscope and then found to be 100 um, 15 um, and 5 um, respectively. The solid electrolyte layer and negative electrode layer of 10% or less in porosity have confirmed sintering sufficiently promoted.

Such a solid-state battery has a main-surface current-collecting structure, such that current is collected from the electrode layer in the direction of an arrow as shown in FIG. 4A. In the solid-state battery of FIG. 4A, the electron diffusion path in the negative electrode layer 2 was 15 um.

In addition, the top-view dimensions (the dimensions in the X and Y directions) after the sintering were measured and found to be 8 mm × 8 mm. The solid-state battery according to the present example was shrunk with voids reduced through the sintering process.

(Measurement and Evaluation)

• Area Ratio of Total Conductive additive

An SEM image (photograph) showing the laminated structure (sectional structure) of the solid-state battery was taken with image analysis software "Azo-kun" (from Asahi Kasei Engineering Corporation). The cross section of the solid-state battery for taking the SEM image is a cross section parallel to the laminating direction L of the positive electrode layer, solid electrolyte layer, negative electrode layer, and the like and perpendicular to the positive electrode terminal and the negative electrode terminal, and passing through the center of gravity of the solid-state battery in planar view. The center of gravity of the solid-state battery in planar view is a point at which a homogeneous material (for example, paper) cut along the contour of the solid-state battery (in planar view) is supported in balance. The area ratio of the total conductive additive confirmed in the negative electrode layer of the SEM image was determined. The area ratio refers to the average of the values measured at arbitrary ten sites, which is the ratio of the area of the total conductive additive to the total area of each field of view.

• Area Ratio of Conductive additive in Elongated Shape in Section View

Determined was the area ratio of the conductive additive in an elongated shape in section view, identified in the negative electrode layer of the SEM image taken by the method measuring the area ratio of the total conductive additive. Particularly, the content of the conductive additive in an elongated shape in section view was determined the average of the values measured at arbitrary ten points, which is expressed as an area ratio with respect to the negative electrode layer (that is, the total area of each field of view in the negative electrode layer) and the area ratio of the conductive additive in an elongated shape in section view with respect to the total conductive additive (that is, the area of the total conductive additive in each field of view).

• Area Ratio of Conductive additive in Elongated Shape in Section View at Orientation Angle of 30° or less

Determined was the area ratio of the conductive additive in an elongated shape in section view at an orientation angle of 30° or less, identified in the negative electrode layer of the SEM image taken by the method measuring the area ratio of the total conductive additive. The area ratio refers to the average of the values measured at arbitrary ten sites, which is the ratio of the area of the conductive additive in an elongated shape in section view at an orientation angle of 30° or less to the total conductive additive in each field of view.

• Average Aspect Ratio (a/b) of Conductive additive in Elongated Shape in Section View

Determined was the average aspect ratio of the conductive additive in an elongated shape in section view, identified in the negative electrode layer of the SEM image taken by the method measuring the area ratio of the total conductive additive. The aspect ratio refers to the average value of the aspect ratios of arbitrary hundred conductive additives in an elongated shape in section view, measured at arbitrary ten sites.

• Average Short-side Length b of Conductive additive in Elongated Shape in section view

Determined was the average short-side length b of the conductive additive in an elongated shape in section view, identified in the negative electrode layer of the SEM image taken by the method measuring the area ratio of the total conductive additive. The average short-side length b refers to the average value of the short-side lengths of arbitrary hundred conductive additives in an elongated shape in section view, measured at arbitrary ten sites.

• Utilization Factor of Negative Electrode Active Material

The solid-state battery was subjected to a constant-current charge-discharge test, thereby measuring the quantity of electricity at a current density corresponding to 0.05 C in a voltage range of 0.2 V to 3.0 V (vs. Li/Li+), and then calculating the reversible capacity.

The first reversible capacity was calculated by dividing the initial reversible quantity of electricity obtained from the constant-current charge-discharge test by the weight of the negative electrode active material. In addition, the capacity obtained when V (vanadium) in the negative electrode active material developed a two-electron reaction was defined as a theoretical capacity, and the initial reversible capacity was divided by the theoretical capacity to calculate a utilization factor R. Further, in the system in which $Li_{1.1}V_{0.9}O_2$ used in Comparative Example 6 and Example 21 was used as the negative electrode active material, for inhibiting the reaction of alloying the conductive additive Ag, the quantity of electricity was measured at 0.1 V to 2.5 V (vs. Li/Li+) to calculate the reversible capacity. The first reversible capacity was calculated by dividing the initial reversible quantity of electricity obtained from the constant-current charge-discharge test by the weight of the negative electrode active material. It is to be noted that the theoretical capacity was, as a capacity that can be acquired in the voltage range mentioned above, defined as the capacity obtained when V in the negative electrode active material developed 0.3 electron reaction.

◎; 90% ≤ R ≤ 100% (best);
◦; 85% ≤ R < 90% (good);
△; 75% ≤ R < 85% (acceptable) (no problem for practical use) ;
×; R < 75% (not acceptable) (problem for practical use) .

[Examples 2 to 4]

Solid-state batteries were manufactured, and measured and evaluated in the same manner as in Example 1, except for varying the content of the conductive additive in an elongated shape in section view.

[Comparative Examples 1 to 3]

Solid-state batteries were manufactured, and measured and evaluated in the same manner as in Example 1, except for using a spherical conductive additive (spherical Ag powder A, average primary particle size: 0.4 um, from SHOEI CHEMICAL INC.) instead of the conductive additive in an elongated shape in section view and varying the content of the spherical conductive additive.

[Table 4]

| Conductive Additive in Elongated Shape in Section View: Flattened Conductive Additive | | | | | | | | | | | |
|---|---|---|---|---|---|---|---|---|---|---|---|
| | Type of Conductive Additive Used | Current-collecting Structure | Area Ratio of Total Conductive Additive (1) (%) | Area Ratio of Flattened Conductive Additive (2) (%) | Area Ratio of Flattened Conductive Additive (1) (%) | Orientation Angle of 30° or less (2) (%) | Average Aspect Ratio of Flattened Conductive Additive a/b | Average Short-side Length of Flattened Conductive Additive b (μm) | Utilization Factor of Negative Electrode Active Material (%) | Determination | Rate of Increase (%) |
| Comparative Example 1 | Spherical Ag Powder A | Main Surface | 25 | 8 | 2.0 | 3 | 3.2 | 0.65 | 61 | × | - |
| Comparative Example 2 | Spherical Ag Powder A | Main Surface | 20 | 5 | 1.0 | 1 | 2.3 | 0.54 | 45 | × | - |
| Comparative Example 3 | Spherical Ag Powder A | Main Surface | 15 | 1 | 0.15 | 0 | - | 0.52 | 32 | × | - |
| Example 1 | Flattened Ag Powder A | Main Surface | 25 | 78 | 19.5 | 65 | 4.1 | 1.2 | 95 | ⊙ | 55 (A) |
| Example 2 | Flattened Ag Powder A | Main Surface | 20 | 80 | 16.0 | 68 | 4.1 | 1.2 | 93 | ⊙ | 107(B) |
| Example 3 | Flattened Ag Powder A | Main Surface | 15 | 81 | 12.2 | 72 | 4.2 | 1.1 | 92 | ⊙ | 188(C) |
| Example 4 | Flattened Ag Powder A | Main Surface | 10 | 82 | 8.2 | 72 | 4.3 | 1.3 | 82 | △ | - |

(1) The ratio with respect to the negative electrode layer. (2) The ratio with respect to the total conductive additive. Orientation Angle of 30° or less: the area ratio of the flattened conductive additive at an orientation angle of 30° or less (A) The rate of increase from Comparative Example 1 in the utilization factor of the negative electrode active material (B) The rate of increase from Comparative Example 2 in the utilization factor of the negative electrode active material (C) The rate of increase from Comparative Example 3 in the utilization factor of the negative electrode active material

It is to be noted that in Comparative Examples 1 to 3 have flattened powders observed due to connected parts of the spherical conductive additives.

In addition, Examples 1 to 4 have flattened powder ratios decreased due to parts of the flattened powders made into balls at the time of the sintering.

In Comparative Examples 1 to 3, the utilization factor of the active material of the solid-state battery is shown with the varying content of the spherical conductive additive. It has been determined that in the cell with the spherical conductive additive used, the utilization factor of the active material is significantly decreased as the area ratio of the conductive additive is decreased. This is believed to be because an active material that makes no contribution to charge-discharge is present without electrons supplied, due to the disconnected conductive path of the conductive additive in the negative electrode layer.

In contrast, from Example 1 to 4, it has been determined that containing the flattened powder as the conductive additive allows the reversible capacity to be maintained at a high level if the content of the conductive additive is decreased. This is believed to be because the use of the flattened powder can prevent balls from being made at the time of the sintering, and because the high ability to form the conductive path makes the conductive path in the negative electrode mixture layer more likely to be connected as compared with the same content of the spherical powder.

In addition, also in the case of containing the flattened powder, the decreased reversible capacity was observed when the area ratio of the conductive additive was 10%. From the foregoing, it has been determined that when the area ratio of the conductive additive is about 12% or more (in particular 150 or more), a particularly high utilization factor can be achieved, which is preferred.

[Examples 5 and 6 and Comparative Example 4]

Solid-state batteries were manufactured, and measured and evaluated in the same manner as in Example 2, except for using the spherical conductive additive and the flattened conductive additive in mixture, and varying the mixing ratio of the agents to vary the area ratio of the flattened conductive additive.

[Table 5]

Conductive Additive in Elongated Shape in Section View: Flattened Conductive Additive

| | Type of Conductive Additive Used | Current-collecting Structure | Area Ratio of Total Conductive Additive (1) (%) | Area Ratio of Flattened Conductive Additive (2) (%) | Area Ratio of Flattened Conductive Additive (1) (%) | Orientation Angle of 30° or less (2) (%) | Average Aspect Ratio of Flattened Conductive Additive a/b | Average Short-side Length of Flattened Conductive Additive b (μm) | Utilization Factor of Negative Electrode Active Material (%) | Determination |
|---|---|---|---|---|---|---|---|---|---|---|
| Comparative Example 2 | Spherical Ag Powder A | Main Surface | 20 | 5 | 1.0 | 1 | 2.3 | 0.54 | 45 | × |
| Comparative Example 4 | Flattened Ag Powder A + Spherical Ag Powder A | Main Surface | 20 | 33 | 6.6 | 24 | 4.1 | 0.54 | 72 | × |
| Example 2 | Flattened Ag Powder A | Main Surface | 20 | 80 | 16.0 | 68 | 4.1 | 1.2 | 93 | ⊙ |
| Example 5 | Flattened Ag Powder A + Spherical Ag Powder A | Main Surface | 20 | 62 | 12.4 | 51 | 4.0 | 1.3 | 88 | ○ |
| Example 6 | Flattened Ag Powder A + Spherical Ag Powder A | Main Surface | 20 | 40 | 8.0 | 34 | 4.2 | 1.2 | 84 | △ |

(1) The ratio with respect to the negative electrode layer. (2) The ratio with respect to the total conductive additive. Orientation Angle of 30° or less: the area ratio of the flattened conductive additive at an orientation angle of 30° or less

It is to be noted that Comparative Examples 2 and 4 and Examples 2, 5, and 6 have the same area ratio of the conductive additive, and differ in the area ratio of the flattened conductive additive.

From the comparison among Comparative Examples 2 and 4 and Examples 2, 5, and 6, it has been determined that the utilization factor of the active material is improved with an increase in the area ratio of the flattened conductive additive in the same area ratio of the conductive additive. In addition, it has been determined that the area ratio of the flattened conductive additive is preferably 35% or more in order to obtain a sufficient utilization factor. In addition, it has been determined that when the area ratio of the flattened conductive additive is 50% or more, in particular 70% or more, an active material utilization factor of 85% or more, in particular, 90% or more is obtained, which is particularly preferred.

[Examples 7 to 9]

Solid-state batteries were manufactured, and measured and evaluated in the same manner as in Example 2, except for changing the type of the flattened Ag powder.

[Table 6]

| Conductive Additive in Elongated Shape in Section View: Flattened Conductive Additive | | | | | | | | | | |
|---|---|---|---|---|---|---|---|---|---|---|
| | Type of Conductive Additive Used | Current-collecting Structure | Area Ratio of Total Conductive Additive (1) (%) | Area Ratio of Flattened Conductive Additive (2) (%) | Area Ratio of Flattened Conductive Additive (1) (%) | Orientation Angle of 30° or less (2) (%) | Average Aspect Ratio of Flattened Conductive Additive a/b | Average Short-side Length of Flattened Conductive Additive b (μm) | Utilization Factor of Negative Electrode Active Material (%) | Determination |
| Example 7 | Flattened Ag Powder B | Main Surface | 20 | 80 | 16.0 | 62 | 4.0 | 0.6 | 98 | ⊙ |
| Example 2 | Flattened Ag Powder A | Main Surface | 20 | 80 | 16.0 | 68 | 4.1 | 1.2 | 93 | ⊙ |
| Example 8 | Flattened Ag Powder C | Main Surface | 20 | 78 | 15.6 | 60 | 4.2 | 1.8 | 88 | ○ |
| Example 9 | Flattened Ag Powder D | Main Surface | 20 | 79 | 15.8 | 61 | 4.3 | 2.5 | 81 | △ |
| (1) The ratio with respect to the negative electrode layer. (2) The ratio with respect to the total conductive additive. Orientation Angle of 30° or less: the area ratio of the flattened conductive additive at an orientation angle of 30° or less | | | | | | | | | | |

It is to be noted that in Examples 7 to 9, the utilization factor of the active material is shown in the case of using the flattened conductive additive with about the same aspect ratio and the varying thickness of the short side.

It has been determined that the utilization factor of the active material is increased as the thickness b of the short side of the flattened conductive additive is reduced. This is believed to be because, with the same aspect ratio, the area of contact between the active material and the conductive additive is increased as the short side b is smaller. In this regard, it has been determined that a higher active material utilization factor can be obtained by setting the value of b to 2.0 um or less, in particular, 1.5 um or less.

[Examples 10 to 13]

Solid-state batteries were manufactured, and measured and evaluated in the same manner as in Example 2, except for using a flattened conductive additive with the same thickness of the short side and the varying aspect ratio.

[Table 7]

| Conductive Additive in Elongated Shape in Section View: Flattened Conductive Additive | | | | | | | | | | |
|---|---|---|---|---|---|---|---|---|---|---|
| | Type of Conductive Additive Used | Current-collecting Structure | Area Ratio of Total Conductive Additive (1) (%) | Area Ratio of Flattened Conductive Additive (2) (%) | Area Ratio of Flattened Conductive Additive (1) (%) | Orientation Angle of 30° or less (2) (%) | Average Aspect Ratio of Flattened Conductive Additive a/b | Average Short-side Length of Flattened Conductive Additive b (μm) | Utilization Factor of Negative Electrode Active Material (%) | Determination |
| Example 2 | Flattened Ag Powder A | Main Surface | 20 | 80 | 16.0 | 68 | 4.1 | 1.2 | 93 | ⊙ |
| Example 10 | Flattened Ag Powder E | Main Surface | 20 | 76 | 15.2 | 64 | 2.1 | 1.1 | 83 | △ |
| Example 11 | Flattened Ag Powder F | Main Surface | 20 | 79 | 15.8 | 67 | 3.2 | 1.2 | 91 | ⊙ |
| Example 12 | Flattened Ag Powder G | Main Surface | 20 | 80 | 16.0 | 70 | 6.2 | 1.3 | 93 | ⊙ |
| Example 13 | Flattened Ag Powder H | Main Surface | 20 | 82 | 16.4 | 78 | 10.5 | 1.2 | 83 | △ |
| (1) The ratio with respect to the negative electrode layer. (2) The ratio with respect to the total conductive additive. Orientation Angle of 30° or less: the area ratio of the flattened conductive additive at an orientation angle of 30° or less | | | | | | | | | | |

From Table 7, it has been determined that when the aspect ratio is 2.5 or more and 10 or less, in particular, 3 or more and 8 or less, a particularly high utilization factor is obtained, which is preferred.

When the aspect ratio is excessively low, the percolation of the conductive additive is believed to be less likely to proceed, thus decreasing the utilization factor.

When the aspect ratio is excessively high, the bent rate of the ion conduction path in the negative electrode layer is believed to be increased, thus decreasing the utilization factor.

[Example 14]

A solid-state battery was manufactured, and measured and evaluated in the same manner as in Example 2, except for forming no negative electrode current-collecting layer and employing an end-surface current-collecting structure electrically connected to the negative electrode terminal via a negative electrode current collector, with the negative layer in conduct with the negative electrode current collector at an end surface of the negative electrode layer.

The obtained solid-state battery had a sectional structure as shown in FIG. 4B.

Particularly, as shown in FIG. 4B, the solid-state battery of FIG. 4B was manufactured by the same method as the method for manufacturing the solid-state battery of FIG. 4A except that an Ag paste coating layer for the negative electrode current collector 210 was formed on an end surface of the green sheet for the negative electrode layer.

Such a solid-state battery has an end-surface current-collecting structure, such that current is collected from the electrode layer in the direction of an arrow as shown in FIG. 4B. In the solid-state battery of FIG. 4B, the electron diffusion path in the negative electrode layer 2 was 15 um.

In addition, the top-view dimensions (the dimensions in the X and Y directions) after the sintering were measured and found to be 8 mm × 8 mm. The solid-state battery according to the present example was shrunk with voids reduced through the sintering process.

[Examples 15 to 18]

Solid-state batteries were manufactured, and measured and evaluated in the same manner as in Example 14, except that the area ratio of the flattened conductive additive at an orientation angle of 30° or less was changed by changing the slurry viscosity at the time of forming the green sheet for a negative electrode layer.

[Comparative Example 5]

A solid-state battery was manufactured, and measured and evaluated in the same manner as in Example 14, except for using a spherical conductive additive (spherical Ag powder A, average primary particle size: 0.4 um, from SHOEI CHEMICAL INC.) instead of the conductive additive in an elongated shape in section view and varying the content of the spherical conductive additive.

[Table 8]

| Conductive Additive in Elongated Shape in Section View: Flattened Conductive Additive | | | | | | | | | | |
|---|---|---|---|---|---|---|---|---|---|---|
| | Type of Conductive Additive Used | Current-collecting Structure | Area Ratio of Total Conductive Additive (1) (%) | Area Ratio of Flattened Conductive Additive (2) (%) | Area Ratio of Flattened Conductive Additive (1) (%) | Orientation Angle of 30° or less (2) (%) | Average Aspect Ratio of Flattened Conductive Additive a/b | Average Short-side Length of Flattened Conductive Additive b (μm) | Utilization Factor of Negative Electrode Active Material (%) | Determination |
| Comparative Example 1 | Spherical Ag Powder A | Main Surface | 25 | 8 | 2.0 | 3 | 3.2 | 0.65 | 61 | × |
| Comparative Example 5 | Spherical Ag Powder A | End Surface | 25 | 8 | 2.0 | 3 | 3.2 | 0.65 | 37 | × |
| Example 2 | Flattened Ag Powder A | Main Surface | 20 | 80 | 16.0 | 68 | 4.1 | 1.2 | 93 | ⊙ |
| Example 14 | Flattened Ag Powder A | End Surface | 20 | 80 | 16.0 | 68 | 4.1 | 1.2 | 92 | ⊙ |
| Example 15 | Flattened Ag Powder A | End Surface | 20 | 78 | 15.6 | 46 | 4.0 | 1.1 | 82 | △ |
| Example 16 | Flattened Ag Powder A | End Surface | 20 | 79 | 15.8 | 57 | 4.2 | 1.2 | 91 | ⊙ |
| Example 17 | Flattened Ag Powder A | End Surface | 20 | 81 | 16.2 | 71 | 4.1 | 1.3 | 94 | ⊙ |

(continued)

| Conductive Additive in Elongated Shape in Section View: Flattened Conductive Additive | | | | | | | | | | |
|---|---|---|---|---|---|---|---|---|---|---|
| | Type of Conductive Additive Used | Current-collecting Structure | Area Ratio of Total Conductive Additive (1) (%) | Area Ratio of Flattened Conductive Additive (2) (%) | Area Ratio of Flattened Conductive Additive (1) (%) | Orientation Angle of 30° or less (2) (%) | Average Aspect Ratio of Flattened Conductive Additive a/b | Average Short-side Length of Flattened Conductive Additive b (μm) | Utilization Factor of Negative Electrode Active Material (%) | Determination |
| Example 18 | Flattened Ag Powder A | End Surface | 20 | 82 | 16.4 | 77 | 4.3 | 1.1 | 89 | △ |
| (1) The ratio with respect to the negative electrode layer. (2) The ratio with respect to the total conductive additive. Orientation Angle of 30° or less: the area ratio of the flattened conductive additive at an orientation angle of 30° or less | | | | | | | | | | |

It has been determined that in spite of the use of the same negative electrode layer as in Comparative Example 1, the utilization factor of the active material is significantly decreased by employing the end-surface current-collecting structure in Comparative Example 5. This is believed to be because the end-surface current-collecting structure has a need for the conductive path also continuously formed in the in-plane direction, thus making the conductive path very long and making the conductive path more likely to be disconnected.

In contrast, it has been determined that in Example 14, in spite of the use of the same negative electrode layer as in Example 2, the utilization factor is maintained at a high level with the end-surface current-collecting structure employed. This is believed to be because the use of the flattened powder further facilitates the formation of the conductive path in the negative electrode layer, and because the orientation of the flattened powder in the in-plane direction facilitates the formation of the conductive path in the in-plane direction.

From Examples 14 to 18, it is determined that the utilization factor of the active material is changed by changing the proportion of the flattened powder at an orientation angle of 30° or less. In particular, with the proportion of the flattened powder at an orientation angle of 30° or less in the range of 55% or more and 75% or less, a preferred result was obtained with the utilization factor of the active material being 90% or more. This is believed to be because the conductive path in the in-plane direction is less likely to be obtained when the degree of orientation is lower, whereas the conductive path in the thickness direction of the negative electrode layer is less likely to be formed when the degree of orientation is excessively high.

[Example 19]

A solid-state battery was manufactured, and measured and evaluated in the same manner as in Example 14, except for using the fibrous Ag powder A as the conductive additive in an elongated shape in section view.

The use of the fibrous Ag powder has also achieved an effect equivalent to or greater than that in the case of using the flattened powder according to Example 14.

[Table 9]

| Conductive Additive in Elongated Shape in Section View: Fibrous Conductive Additive | | | | | | | | | | |
|---|---|---|---|---|---|---|---|---|---|---|
| | Type of Conductive Additive Used | Current-collecting Structure | Area Ratio of Total Conductive Additive (1) (%) | Area Ratio of Flattened Conductive Additive (2) (%) | Area Ratio of Flattened Conductive Additive (1) (%) | Orientation Angle of 30° or less (2) (%) | Average Aspect Ratio of Flattened Conductive Additive a/b | Average Short-side Length of Flattened Conductive Additive b (μm) | Utilization Factor of Negative Electrode Active Material (%) | Determination |
| Example 19 | Fibrous Ag Powder A | End Surface | 20 | 83 | 16.6 | 71 | 3.6 | 1.0 | 98 | ⊙ |
| (1) The ratio with respect to the negative electrode layer. (2) The ratio with respect to the total conductive additive. Orientation Angle of 30° or less: the area ratio of the fibrous conductive additive at an orientation angle of 30° or less | | | | | | | | | | |

[Example 20]

A solid-state battery was manufactured, and measured and evaluated in the same manner as in Example 2, except for using the flattened Cu powder A as the conductive additive in an elongated shape in section view.

It has been determined that the same effect as that of Ag is obtained also when Cu is used for the conductive additive.

[Table 10]

| Conductive Additive in Elongated Shape in Section View: Flattened Conductive Additive Cu | | | | | | | | | | |
|---|---|---|---|---|---|---|---|---|---|---|
| | Type of Conductive Additive Used | Current-collecting Structure | Area Ratio of Total Conductive Additive (1) (%) | Area Ratio of Flattened Conductive Additive (2) (%) | Area Ratio of Flattened Conductive Additive (1) (%) | Orientation Angle of 30° or less (2) (%) | Average Aspect Ratio of Flattened Conductive Additive a/b | Average Short-side Length of Flattened Conductive Additive b (μm) | Utilization Factor of Negative Electrode Active Material (%) | Determination |
| Example 20 | Flattened Cu Powder A | Main Surface | 20 | 81 | 16.8 | 64 | 4.0 | 1.4 | 94 | ⊙ |
| (1) The ratio with respect to the negative electrode layer. (2) The ratio with respect to the total conductive additive. Orientation Angle of 30° or less: the area ratio of the fibrous conductive additive at an orientation angle of 30° or less | | | | | | | | | | |

[Example 21]

A solid-state battery was manufactured, and measured and evaluated in the same manner as in Example 2, except for using ($Li_{1.1}V_{0.9}O_2$) as the negative electrode active material.

[Comparative Example 6]

A solid-state battery was manufactured, and measured and evaluated in the same manner as in Example 21, except for using a spherical conductive additive (spherical Ag powder A, average primary particle size: 0.4 um, from SHOEI CHEMICAL INC.) instead of the conductive additive in an elongated shape in section view.

From the comparison between Example 2 and Example 21, it has been determined that, based on the rate of increase in the utilization factor of the negative electrode active material, the effect of making the form of the conductive additive into an elongated shape in section view is more particularly enhanced when the negative electrode layer includes a negative electrode active material with a Li/V ratio of 2 or more, than in the case of including a negative electrode active material with a Li/V ratio of less than 2.

[Table 11]

| | Li/V of Negative Electrode Active Material | Type of Conductive Additive Used | Current-collecting Structure | Area Ratio of Total Conductive Additive (1) (%) | Area Ratio of Flattened Conductive Additive (2) (%) | Area Ratio of Flattened Conductive Additive (1) (%) | Orientation Angle of 30° or less (2) (%) | Average Aspect Ratio of Flattened Conductive Additive a/b | Average Short-side Length of Flattened Conductive Additive b (μm) | Utilization Factor of Negative Electrode Active Material (%) | Determination | Rate of Increase (%) |
|---|---|---|---|---|---|---|---|---|---|---|---|---|
| Comparative Example 2 | 3 | Spherical Ag Powder A | Main Surface | 20 | 5 | 1.0 | 1 | 2.3 | 0.54 | 45 | × | - |
| Example 2 | 3 | Flattened Ag Powder A | Main Surface | 20 | 80 | 16.0 | 68 | 4.1 | 1.2 | 93 | ⊙ | 107(B) |
| Comparative Example 6 | 1.2 | Spherical Ag Powder A | Main Surface | 20 | 33 | 6.6 | 8 | 2.2 | 0.61 | 53 | × | - |
| Example 21 | 1.2 | Flattened Ag Powder A | Main Surface | 20 | 82 | 16.4 | 69 | 4.3 | 1.1 | 77 | △ | 45 (D) |

(1) The ratio with respect to the negative electrode layer. (2) The ratio with respect to the total conductive additive. Orientation Angle of 30° or less: the area ratio of the flattened conductive additive at an orientation angle of 30° or less (B) The rate of increase from Comparative Example 2 in the utilization factor of the negative electrode active material (D) The rate of increase from Comparative Example 6 in the utilization factor of the negative electrode active material

INDUSTRIAL APPLICABILITY

The solid-state battery according to an embodiment of the present invention can be used in various fields in which the use of the battery or electric storage is expected. Although merely by way of example only, the solid-state battery according to an embodiment of the present invention can be used in the field of electronics mounting. The solid-state battery according to an embodiment of the present invention can also be used in electric, information, and communication fields (for example, the fields of electric/electronic devices or mobile devices, including cellular phones, smartphones, smartwatches, lap-top computers, digital cameras, activity meters, arm computers, electronic papers, and small-size electronic devices such as wearable devices, RFID tags, and card-type electronic money, and smartwatches) in which a mobile device or the like is used, home and small-size industrial applications (for example, the fields of electric tools, golf carts, domestic and nursing care, and industrial robots), large-size industrial applications (for example, the fields of forklifts, elevators, harbor cranes), transportation system fields (for example, fields such as hybrid vehicles, electric vehicles, buses, trains, power-assisted bicycles, and electric motorcycles), electric power system applications (for example, fields such as various types of electric power generation, load conditioners, smart grids, general household installation-type electric storage systems), medical applications (fields of medical device such as earphone hearing aids), pharmaceutical applications (fields such as dosage management systems), IoT fields, space and deep-sea applications (for example, fields such as spacecraft and submersible research vehicles), and the like.

## Claims

1. A solid-state battery comprising a positive electrode layer, a negative electrode layer, and a solid electrolyte layer interposed between the positive electrode layer and the negative electrode layer,
   wherein the negative electrode layer includes an conductive additive that includes a metal material and has an elongated shape in section view, at 7% or more and 28% or less in area ratio with respect to the negative electrode layer.

2. The solid-state battery according to claim 1, wherein the negative electrode layer includes a negative electrode active material in which a molar ratio of Li to V (vanadium) is 2.0 or more.

3. The solid-state battery according to claim 1 or 2, wherein the conductive additive is a flattened conductive additive, a fibrous conductive additive, or a mixture thereof.

4. The solid-state battery according to any one of claims 1 to 3, wherein the conductive additive has an average aspect ratio of 2.0 or more.

5. The solid-state battery according to any one of claims 1 to 4, wherein the conductive additive has an average short-side length of 0.1 um or more and 4.0 um or less.

6. The solid-state battery according to any one of claims 1 to 5, wherein the conductive additive includes one or more metal materials selected from the group consisting of Ag (silver), Au (gold), Pd (palladium), Pt (platinum), Cu (copper), Sn (tin), Ni (nickel), and alloys thereof.

7. The solid-state battery according to any one of claims 1 to 6, wherein the conductive additive is included at 35% or more in area ratio with respect to the total conductive additive.

8. The solid-state battery according to any one of claims 1 to 7, wherein, of the conductive additive, the conductive additive at an orientation angle of 30° or less is included at 20% or more in area ratio with respect to the total conductive additive.

9. The solid-state battery according to any one of claims 1 to 8, wherein the negative electrode layer has an end-surface current-collecting structure electrically connected to a negative electrode terminal via a negative electrode current collector, in contact with the negative electrode current collector at an end surface of the negative electrode layer.

10. The solid-state battery according to claim 9, wherein the negative electrode current collector has an upper surface that is flush with an upper surface of the negative electrode layer and a lower surface that is flush with a lower surface of the negative electrode layer in a laminating direction of the positive electrode layer, the solid electrolyte layer, and the negative electrode layer.

**11.** The solid-state battery according to any one of claims 1 to 10, wherein the negative electrode active material has an average chemical composition represented by a general formula (1):
[Chemical Formula 1]

$$(Li_{[3-ax+(5-b)(1-y)]}A_x)(V_yB_{l-y})O_4 \quad (1)$$

(in the formula (1), A is one or more elements selected from the group consisting of Na, K, Mg, Ca, and Zn; B is one or more elements selected from the group consisting of Zn, Al, Ga, Si, Ge, Sn, P, As, Ti, Mo, W, Fe, Cr, and Co; $0 \leq x \leq 1.0$; $0.5 \leq y \leq 1.0$; a is an average valence of A; b is an average valence of B).

**12.** The solid-state battery according to any one of claims 1 to 11, wherein the negative electrode active material has a $\beta_{II}$-$Li_3VO_4$-type crystal structure or a $\gamma_{II}$-$Li_3VO_4$-type crystal structure.

**13.** The solid-state battery according to any one of claims 1 to 12, wherein the negative electrode layer has a thickness of 2 um or more and 50 um or less.

**14.** The solid-state battery according to any one of claims 1 to 13, wherein

at least one of the negative electrode layer and the solid electrolyte layer further includes a sintering aid, and the sintering aid is a compound that has a chemical composition containing Li, B, and O, and with a molar ratio (Li/B) of Li to B being 2.0 or more.

**15.** The solid-state battery according to any one of claims 1 to 14, wherein the positive electrode layer and the negative electrode layer are layers capable of occluding and releasing lithium ions.

**16.** The solid-state battery according to any one of claim 1 to 15, wherein the solid electrolyte layer and the positive electrode layer and the solid electrolyte layer and the negative electrode layer have sintered bodies sintered integrally with each other.

FIG. 1A

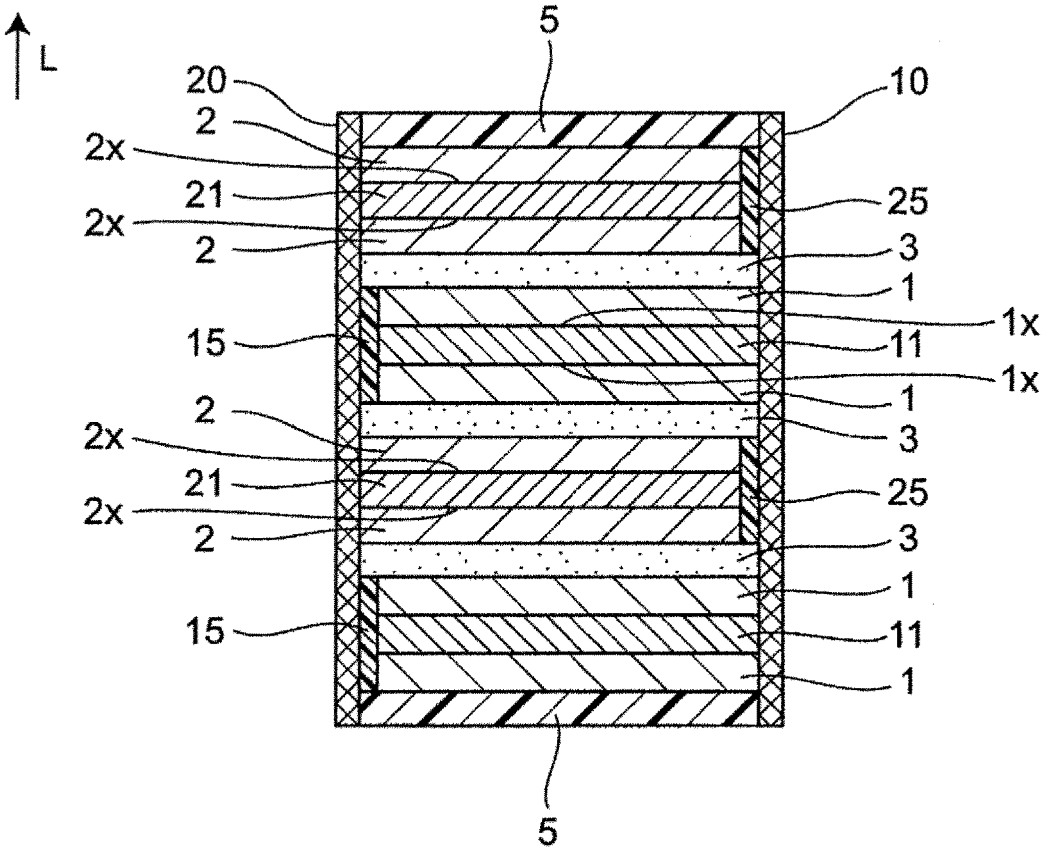

FIG. 1B

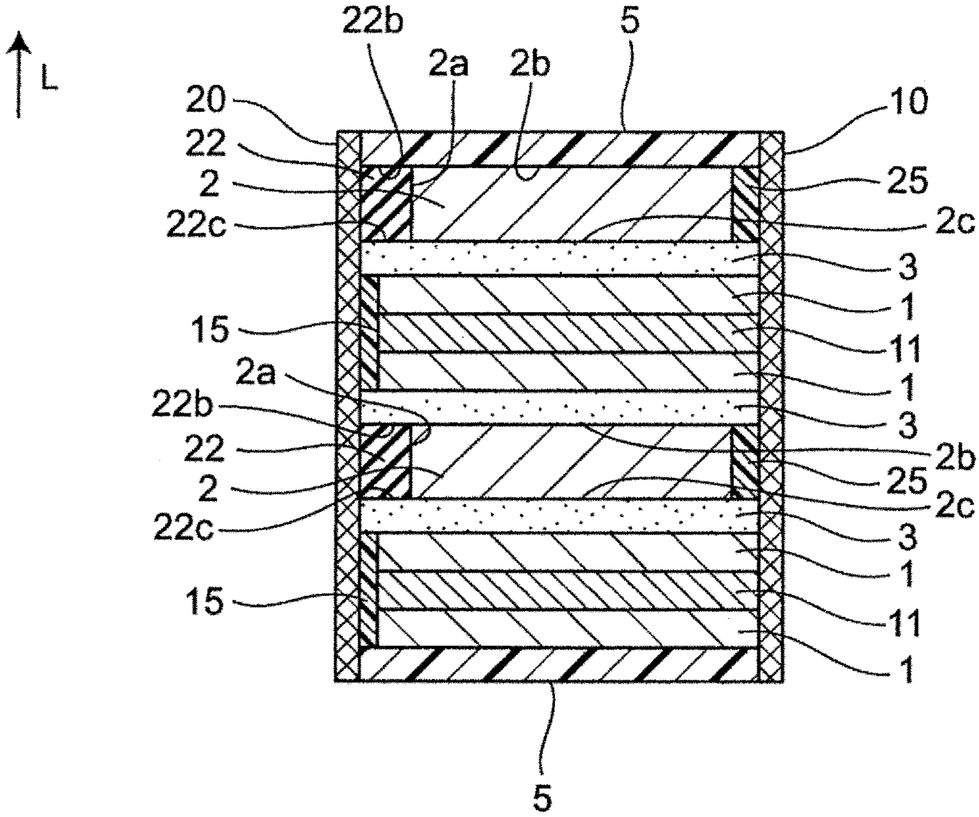
L
22b
5
2a
2b
20
10
22
25
2
22c
2c
3
1
15
11
1
2a
22b
3
22
2b
25
2
2c
22c
3
1
15
11
1
5

FIG. 2

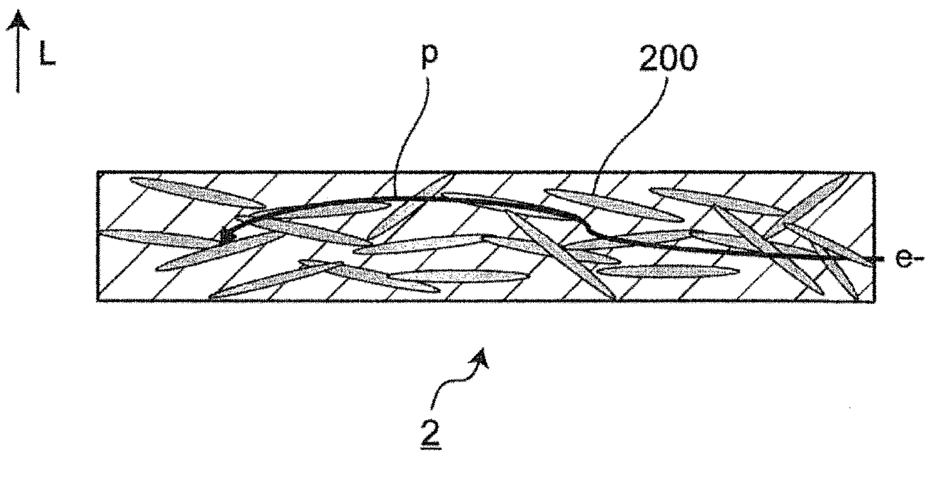
L
p
200
e-
2

FIG. 3A

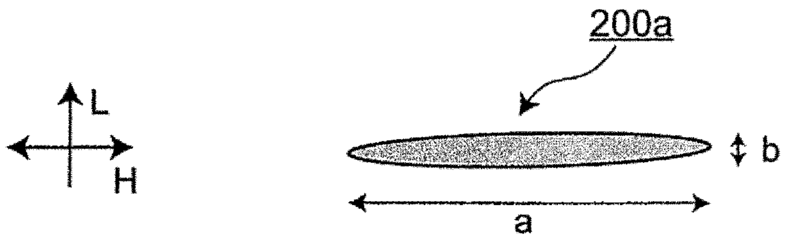


FIG. 3B

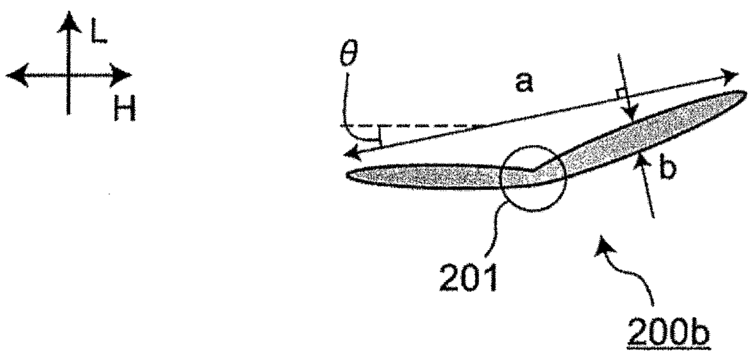

FIG. 4A

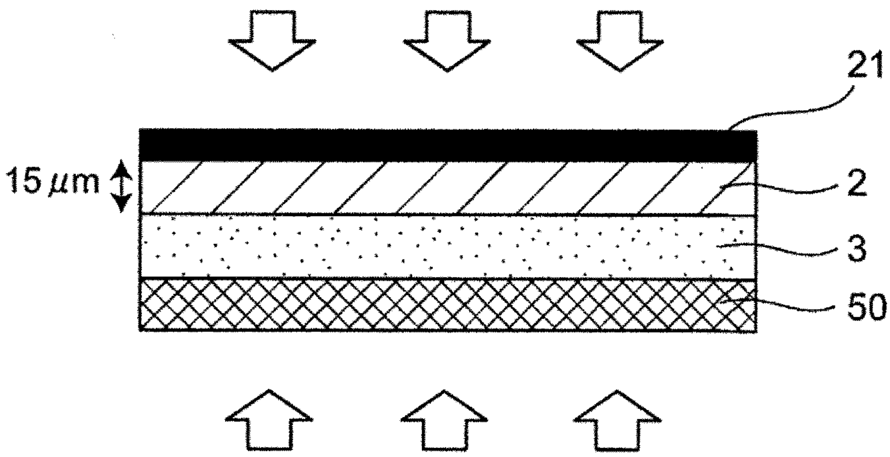

FIG. 4B

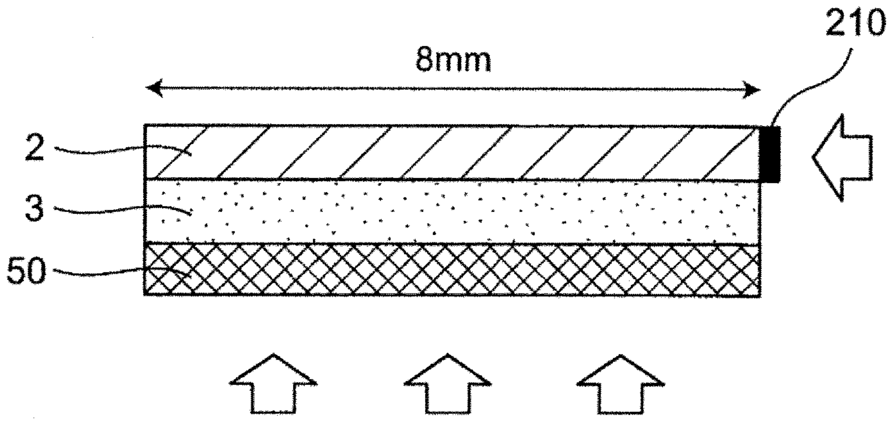


FIG. 5

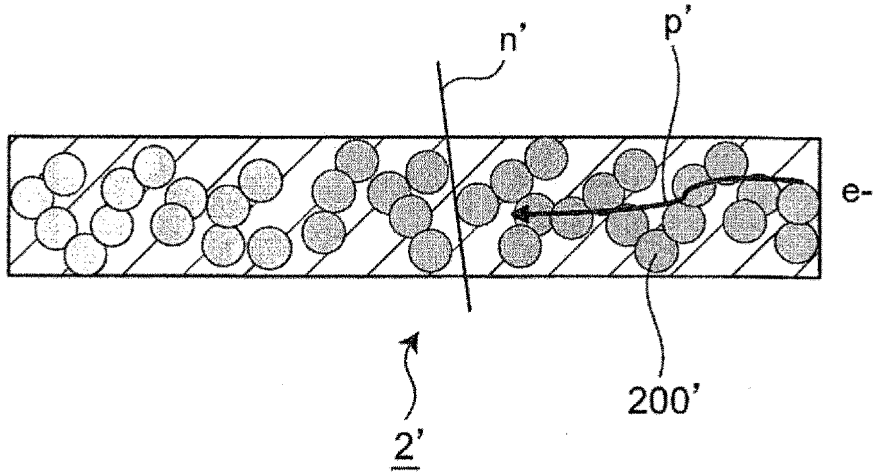

**INTERNATIONAL SEARCH REPORT**

International application No.
PCT/JP2021/010449

A. CLASSIFICATION OF SUBJECT MATTER
Int.Cl. H01M4/13(2010.01)i, H01M4/485(2010.01)i, H01M4/62(2006.01)i, H01M10/052(2010.01)i, H01M10/0562(2010.01)i, H01M10/0585(2010.01)i
FI: H01M10/052, H01M10/0562, H01M10/0585, H01M4/13, H01M4/62Z, H01M4/485
According to International Patent Classification (IPC) or to both national classification and IPC

B. FIELDS SEARCHED
Minimum documentation searched (classification system followed by classification symbols)
Int.Cl. H01M4/13, H01M4/485, H01M4/62, H01M10/052, H01M10/0562, H01M10/0585

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-116127 A (TOYOTA MOTOR CORPORATION) 26 June 2014 (2014-06-26), claims 1, 3, paragraphs [0021], [0022], [0025], [0026] | 1, 3-8, 13, 15-16<br>9-10, 14 |
| X<br>Y | WO 2017/104405 A1 (FUJIFILM CORPORATION) 22 June 2017 (2017-06-22), claims 1-7, paragraphs [0018], [0024], [0050], [0055], [0056], [0113]-[0140], tables 1, 2 | 1, 3-8, 13, 15<br>9-10, 14 |
| Y | JP 2010-108751 A (SUMITOMO ELECTRIC INDUSTRIES, LTD.) 13 May 2010 (2010-05-13), claims 1-7, paragraphs [0006]-[0012], fig. 1-5 | 9-10 |
| Y | WO 2019/093403 A1 (MURATA MANUFACTURING CO., LTD.) 16 May 2019 (2019-05-16), claims 1-5, paragraphs [0016]-[0022], [0146], table 4 | 14 |
| A | JP 2007-35488 A (SANYO ELECTRIC CO., LTD.) 08 February 2007 (2007-02-08), paragraph [0017] | 8 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 May 2021 | 25 May 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/010449

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-255764 A (FUJI PHOTO FILM CO., LTD.) 25 September 1998 (1998-09-25) | 1-16 |
| A | JP 2012-133932 A (SUMITOMO ELECTRIC INDUSTRIES, LTD.) 12 July 2012 (2012-07-12) | 1-16 |

Form PCT/ISA/210 (second sheet) (January 2015)

**INTERNATIONAL SEARCH REPORT**
Information on patent family members

International application No.
PCT/JP2021/010449

| | | |
|---|---|---|
| JP 2014-116127 A | 26 June 2014 | (Family: none) |
| WO 2017/104405 A1 | 22 June 2017 | US 2018/0277901 A1<br>claims 1-7, paragraphs [0039], [0040], [0051]-[0053], [0093], [0100]-[0102], [0202]-[0252], tables 1, 2 |
| JP 2010-108751 A | 13 May 2010 | (Family: none) |
| WO 2019/093403 A1 | 16 May 2019 | CN 111213276 A |
| JP 2007-35488 A | 08 February 2007 | US 2007/0026316 A1<br>paragraph [0021]<br>KR 10-2007-0015001 A<br>CN 1905265 A |
| JP 10-255764 A | 25 September 1998 | (Family: none) |
| JP 2012-133932 A | 12 July 2012 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019044901 A
- WO 2019044902 A
- JP 5644951 B


### Non-patent literature cited in the description


- **A. R. WEST.** *J. solid state chem.,* 1972, vol. 4, 20-28
- **A. R. WEST.** *J. solid state chem.,* 1972, vol. 4, 20-28